# EUROPEAN PATENT SPECIFICATION

(11) **EP 3 585 957 B1**
(45) Date of publication and mention of the grant of the patent: **20.10.2021**
(21) Application number: 18708463.7
(22) Date of filing: 23.02.2018
(51) Int. Cl.: F03B 13/26, F03B 17/06, E02B 9/00, B63B 35/44, B63B 21/50, B63B 1/12, F03D 13/25, F03D 13/10, E04H 12/18

(54) **TURBINE SYSTEM**
TURBINENSYSTEM
SYSTÈME DE TURBINE

(30) Priority: 23.02.2017 GB 201702968; 10.05.2017 GB 201707523; 10.05.2017 GB 201707524
(43) Date of publication of application: 01.01.2020
(73) Proprietor: Sustainable Marine Energy Limited, Edinburgh EH6 6QW (GB)
(72) Inventor: HAYMAN, Jason, Edinburgh Lothian EH6 6QW (GB); MARTIN, Richard, Edinburgh Lothian EH6 6QW (GB); BURDEN, Christopher, Edinburgh Lothian EH6 6QW (GB)
(74) Representative: Cavanna, Edward Paul
(86) International application number: PCT/GB2018/050473
(87) International publication number: WO 2018/154313

(56) References cited:
- CN-B- 103 147 904
- US-A1- 2002 095 878
- US-A1- 2007 207 028
- US-A1- 2011 200 425

## Description

The present invention relates to apparatuses deploying turbines for generating power from water currents, for example at sea or in a river, and methods for installing such apparatuses.

Devices are generally known in which turbines are deployed such that power is generated by them from local water flows. These devices are generally known as tidal turbines but they can be used at any place where there is a flow of water. This includes locations where there are ocean currents, which are not necessarily due to tidal flows, or other locations such as rivers.

Tidal turbine devices have one or more turbines driven round by a rotor. The most common type of rotor has three blades, just as wind turbines may have three blades.

A challenge facing the designers of tidal turbine devices is to devise a way of deploying, operating and demobilising the devices in a cost-effective manner, allowing also for possible maintenance and inspection of the turbines at the operating site.

Turbines are mounted at a depth such that in operation the top of the rotor does not break the water surface during a full revolution. In fact, it is recommended that the tip of the blade remains submerged a minimum distance below the water surface during a full revolution, known as the immersion depth. This may be given in terms of the rotor diameter, e.g. 0.5 times the diameter. Alternatively, the particular depth may be specified for a given rotor size and intended application, for example 6.3m diameter rotors may be specified as requiring a 1.5m tip immersion. This means that the turbine must be raised a reasonable distance from its operational depth in order to be above the water line. A challenge facing the designers of these devices is that it is impractical for the turbines to be in this operating position when the device is being moved from its construction or assembly site. This is may be because the draft of the device is in excess of available water depth at the construction or assembly site or transit route. Alternatively, where the device is assembled in one location, then transported to another location by towing, the resistance to towing of the device from the construction or assembly yard to the operating site is impractical if the turbines and rotors are deployed in the operating position. For the same reasons, it is impracticable for the rotors and turbines to be in the operating position when the device is subsequently demobilised and moved back to shore again.

A further challenge for the designers is that there is sometimes a need or desire to inspect, maintain and maybe replace one or more of the blades of the rotor, or the turbine itself, without removing the device from the offshore site. In the high currents that exist at most times at the offshore site it is impracticable to carry out this maintenance work with the turbines and rotors underwater or to return the entire assembly to dock or dry land.

Thus, while there are many ways to hold the turbine in a relatively fixed location relative to the water bed (permanently anchored structures using e.g. piles, floating tethered structures, etc.), each of them benefits greatly from the ability to raise the turbines above the surface, for both transporting the assembly to or from the desired operational location, and for the subsequent maintenance of the turbines. In particular, tethered devices may have turbines mounted on structural members extending downward from hulls of the device, when in use for power generation. Thus the total draft is more than the diameter of the rotor to ensure that the turbine is fully submerged at all times in operation. In most designs the draft is greater than that, because the rotor is suspended beneath the hull of the device, with a safe clearance between the top of the rotor and the underside of the hull of the device. This determines the distance a turbine must be raised in order that it can clear the water surface.

Tidal turbines vary greatly in weight. For example 62kW turbines usually weigh around 1t to 1.5t, while a 1MW turbine is of the order of 100t to 200t. Based on this, a series of smaller turbines can provide the same power as a larger turbine can, while keeping the weight to around 24t. In any case, raising even just a single smaller turbine can be a complex operation, requiring heavy duty equipment. This increases both the cost of the apparatus for raising the turbines, and the cost of the assembly as a whole, since it is heavier and larger due to the need to accommodate the raising apparatus.

In cases where the structures are buoyant, it can be desirable to provide a quick and convenient means for anchoring a buoyant assembly in place at an installation site. It is common practice to use a turret mooring system for this where there is bidirectional flow, particularly where this flow does not change by 180°. The basic idea in such systems is to provide a fixed point around which a buoyant structure can rotate, i.e. yaw, to adapt to the flow changing. The rotation allows the buoyant structure to adapt to local current flows, much like a marine analogue of a weather vane. This alignment reduces stresses on the structure.

A floating structure is connected to a turret mooring system by anchoring one end of anchoring lines into a water bed, and leaving the other end of each line attached to the turret which floats at the installation site. The floating structure remains separate from the turret until the floating structure arrives at the installation site, at which point the turret is mounted to the floating structure.

This process has a variety of benefits. Firstly, in many applications, it is desirable to ensure that the anchoring lines of a turret mooring system are tensioned correctly prior to mounting. For example, when risers are carrying oil up to a Floating Production Storage and Offloading (FPSO) structure, it is important that these are not overly stressed. Since the mounting operation is carried out at sea, the mounting operation can be complex and can result in stresses to the risers while the correct alignment is sought. Therefore correctly tensioning the anchoring lines prior to the mounting operation is desirable to prevent riser damage. Secondly, this arrangement allows the turret and the floating structure to be constructed and sourced separately. Finally, the turret can be made detachable, and thus can be interchanged with various floating structures, if required.

US 2007/0207028 describes a turbine system includes a support carrying a platform on an upper portion thereof, wherein the support is adapted to be partially submerged within a body of flowing water such that the platform is raised from the water. One or more elongate members are provided which support a turbine assembly at one end are pivotally coupled at an opposite end to the support such that each elongate member (22, 122) may be pivoted to move the associated turbine assembly between raised and lowered positions, out of and into the body of water. In a disclosed example, the elongate member is adapted to be releasably secured relative to the platform when the turbine assembly is located in the raised position.

CN103147904A relates to a double-oblique-arm rotating mechanism used for tidal current power generation. A hydraulic generator is suspended on the end surface of each oblique support arm; two fixed non-rotation blades are mounted on each hydraulic generator; the other end of each oblique support arm is connected with a rotating body through a connecting pin and is fixed by a support arm of the rotating body so that swinging is prevented. A thrust bearing below the rotating body is mounted on a center strut; the lower end of the rotating body is an end surface of a center shaft provided with rolling thrust bearings with an upward floating preventive function; and the center shaft at the lower end of the rotating body is supported by the two radial rolling bearings which are supported by inner rings of a center body. Under the action of a worm and gear transmission mechanism, the oblique support arms and the hydraulic generators suspended on the oblique support arms randomly rotate around the radial rolling bearings, and the power generation by rising tide and falling tide is achieved. During the unit maintenance, a hydraulic servomotor pin shaft is removed, a steel wire rope of a winch mounted in a platform is used to draw the hydraulic generators and the oblique support arms, the oblique support arms rotate with the connecting pin shaft serving as an axis, and the hydraulic generators are lifted above the water level to be maintained.

US 2002/0095878 describes a support tower for large structures such as wind turbines generators, microwave structures, high voltage transmission lines or the like, constructed of telescopic sections with the lowermost section having an edge portion pivotally connected to a foundation to enable the tower sections to be transported to the site of installation. The tower sections are assembled at the installation site in a nested relationship, each within the adjacent lower tower section. The large load is mounted on the upper end of the uppermost tower section and the nested tower sections are then tilted upwardly to a vertical position. After the tower is tilted to its vertical position and securely connected to the foundation, the telescopic tower sections are vertically extended to position the load in a vertically elevated position.

US 2011/0200425 relates to a method of deploying offshore wind turbine assemblies including mounting a wind turbine assembly horizontally on a vessel and transporting the wind turbine assembly to an offshore site. The wind turbine assembly is raised to a vertical condition at the site and attached to anchor weights. Blades are attached to the turbine head after the wind turbine assembly is in the vertical condition. The wind turbine assembly can include a tower including tapered lower and upper sections joined together at their respective wide ends, a turbine head connected to the upper section, and a platform connected to the lower section. The platform includes a buoy tank partially filled with ballast to provide mass and buoyancy. A wave piercing cowling is rotatively attached to the lower section. The turbine head can include an adjustable journal bearing, scabbard blade mounts, and a gearless induction generator with flux adjusting capabilities.

However, as noted above, the mounting procedure can be complex, especially in rough waters. Moreover this process requires that the turret, once installed, remains at sea. This presents considerable difficulties should repairs or replacements be required as these must happen at least in part at sea.

The present invention aims to address the above-noted drawbacks.

Aspects of the present invention are set out in the appended independent claims with preferred features provided in the dependent claims.

Disclosed herein is a general principle for addressing some or all of the above drawbacks. Specifically there is provided an apparatus for raising a turbine relative to a turbine support, the apparatus comprising: means for providing an upward force to the turbine to move the turbine in an upward direction relative to the turbine support; and a guiding system, for causing the turbine to move in a path defining an arc about a pitch or roll axis for a portion of the upward movement of the turbine when the upward force is applied to the turbine. For example, the apparatus may include the turbine support and a pulley fixed relative to the turbine support; means for coupling the turbine support to a turbine support beam via the pulley; and a winch for applying a force to the means for coupling first to raise the turbine support beam relative to the turbine support and second to cause the turbine support beam move in an arced path. In some cases the actuation may be hydraulic, while in others electric actuation may be used. In some cases, it is even possible that the actuation be manual.

The arced path may result in the turbine undergoing a swing-type motion about a pitch or roll axis, that is, about a broadly horizontal axis relative to the turbine support in its expected orientation when in use. In general, "swing" is not intended to mean a reciprocating motion, but a motion where the turbine moves through an arc due to a rotation about a point from which the turbine is separated. In other words, the turbine acts in some ways like a pendulum undergoing a portion of its swing.

The overall motion may be sufficient to raise the turbine above the expected water line of the turbine support. This allows easy on-site inspection and maintenance of the turbines.

Also described herein is a method of raising a turbine relative to a turbine support, comprising the steps of: applying an upward force to the turbine; and moving the turbine in an arced path about a pitch or roll axis for a portion of the upward movement of the turbine when the upward force is applied to the turbine.

The arrangement referred to above can be mounted on a fixed platform, such as a jetty, bridge, quay etc., which may also be used for other purposes, e.g. unloading ships, or as staging areas. Alternatively, the apparatus can form part of a dedicated structure. For example, the assembly can be a buoyant assembly, anchored to a water bed in a river or the ocean. Indeed, the assembly can even be buoyant and submersible, for example to allow the assembly to be held at a predetermined depth below the water surface. In such cases, the assembly may have a variable buoyancy and/or a variable anchor line length to allow the turbines to be raised in a two-stage process. In one step, the assembly is brought to the surface by increasing the buoyancy and/or lengthening the anchor lines, while in the other step the assembly described above is operated to raise the turbines from their position beneath the assembly. When both steps have been performed, the turbines will be above the water line.

A feature of the general principle of the above method and apparatus is that a turbine to be raised undergoes a rotational or arced motion. In general, simply raising a turbine the entire vertical distance required needs a large energy input compared with a rotational motion. This is because a rotational movement can make use of counterweighting effects to reduce the required energy input by reducing changes to the centre of mass of the system during the raising movement.

In some cases, the rotational motion is combined with a linear motion. Simply rotating the turbine to bring it to the surface requires that the turbine support itself be large, because the large draft of the turbine in its operating configuration translates into a large horizontal distance when the turbine is brought to the surface by rotation. This horizontal distance requires a large support to prevent the lever arm provided by a horizontally oriented turbine support generating unacceptably large pitch or roll torques. Similarly, in the event that the turbines are raised for maintenance, inspection, etc. the turbine support should be large enough that a worker can get close to the turbine, when it is in its raised position.

When a turbine is raised using a motion which combines rotational motion with linear motion, the benefit of reduced energy input can be achieved without requiring a large turbine support, thus greatly contributing to the overall efficiency of the turbine assembly.

Within the broad scope of this general principle are many examples, each addressing the problem of improving the efficiency of the turbine raising apparatus, and providing a solution utilising the dual motion concept of a rotation, sometimes as part of a dual motion concept of combined linear and rotational movement. Some particularly advantageous examples, each being a closely related alternative solution to the problems set out above, are presented herein.

An example of a specific embodiment of the general principle is an apparatus for raising a turbine relative to a turbine support, the apparatus comprising: a turbine mount; a turbine mounted on the turbine mount; means for providing an upward force to raise the turbine; and a guidance means; wherein the guidance means is engaged with the turbine mount, and the turbine is moveable in a path defining an arc about a pitch or roll axis in response to the upward force by virtue of the engagement between the guidance means and the support. This arrangement provides a convenient manner of implementing the general principles set out above.

Optionally, the guidance means is a pivot, and the turbine is moveable in an arc by virtue of the turbine mount being pivotable relative to the turbine support. Alternatively, the guidance means may comprise a curved rail or slot. In this latter case the upward force may cause the turbine mount to slide along the guidance means. The rail provides the ability for the turbine to follow a curved path, and optionally a linear part to the path as well by adjusting the exact shape of the rail. In general, the use of a guidance means such as a rail allows a very precise control of the path which the turbines take as they rise.

In some embodiments, the turbine mount is an elongate beam. This allows the turbine to be located at a relatively deep draft while using a relatively small amount of materials. When the turbine mount is an elongate beam, in some embodiments, this may be a telescoping beam comprising an inner beam and an outer beam arranged to slide relative to one another; wherein the telescoping beam is retractable by the inner beam sliding inside the outer beam in response to the upward force. A telescoping beam provides a convenient means of providing a linear motion, as well as providing flexibility in separating the arcing motion from any linear motion.

Optionally the means for providing an upward force comprises means for retracting the inner beam within the outer beam. By allowing the inner beam to retract within the outer beam, the draft of the arrangement can be readily reduced, and the moment exerted by the turbine is reduced, meaning that a lower force is required to rotate the turbine.

In some examples the means for providing an upward force causes the sliding and the arced path motions to occur sequentially. By separating the motions, the design of the rest of the turbine support can be simplified, since the turbines move in a well-defined path.

Alternatively the means for providing an upward force causes the sliding and the arced path motions to occur simultaneously. This can result in a shorter overall time to raise the turbines.

The inner beam may comprise at least one stop for engaging with the outer beam to inhibit the inner beam sliding inside the outer beam beyond a predetermined point. This limits the sliding motion and may help to prevent damage to the apparatus as a whole. In some examples of this type, the upward force causes a sliding action until the at least one stop engages with the outer beam and causes the turbine to move in a path defining an arc as the telescoping beam interacts with the guidance means once the at least one stop has made contact with the outer beam. This allows the sliding motion to transition smoothly into the arcing motion. An example of a suitable guidance means is a curved rail or a curved slot, or simply a pivoted connection. In some cases, the apparatus is arranged so that, in response to the upward force, the interaction between the telescoping beam and the guidance means is a pivoting interaction. When the telescoping action occurs prior to the rotational action, the distance between the turbine and the centre of rotation is reduced prior to the rotation. This reduces the torque required to cause the rotation, thereby improving efficiency and reducing costs, as the actuation mechanism can be smaller and cheaper.

In some cases, the upper end of the telescoping beam is counterweighted to at least partially balance the weight of the turbine. This allows the raising process to be more efficient, since less energy is expended to raise the turbine during the arcing motion.

The apparatus further comprises means to rotate the turbine about a yaw axis for a portion of the upward movement of the turbine when the upward force is applied. This can assist in correctly orienting the turbine to prevent damage to the assembly or the turbine as the turbine is raised.

The yaw axis rotation may be caused by an interaction between the inner beam and the outer beam as the inner beam slides inside the outer beam. That is, the form or overall shape of the inner and outer beams may be such that relative sliding motions necessarily also causes a yaw rotation of the turbine, for example because the turbines are fixed to one of the beams, and the beam rotates.

An example of such a situation is one wherein the inner beam has protrusions on its outer surface which engage with corresponding indentations on the inner surface of the outer beam to cause the yaw axis rotation. In particular, the protrusions and indentations may comprise threaded portions. By including the yaw rotation as an inherent part of the raising process, there is no need to independently control the yaw, so the raising process is simpler and less prone to accidents.

The means for providing the upward force may comprise a single mechanism. This reduces the complexity of the overall system. An example of a suitable mechanism is a winch and cable. For example, the cable may be attached to an inner beam, and may run over a pulley to the winch. Optionally, the pulley is fixed relative to the outer beam.

In some of the above example there is a bearing or bearings that readily allow the supporting structures and turbines to be rotated about a pivot such that the turbines are raised until they are out of the water when desired. This is to facilitate movement of the device from shore to the operating site, or for maintenance of the turbines and rotors at the operating site and also for demobilising of the device from the operating site to shore.

In some of the above examples the supporting structures can be raised upwards prior to rotating them, for example by retracting a telescoping support, where present.

In each of the examples set out above, the turbines may be raised entirely above the expected water line of the assembly. This not only reduces draft for towing the support, but allows the turbines to be inspected, maintained, etc. Moreover, when a turbine rotates, moves in an arced or curved path or moves in a linear manner, this may be due to the force acting directly on it, or it may be due to a force acting on the turbine mount, telescoping beam etc. which causes the turbine to move by virtue of a coupling between the turbine and the turbine mount, telescoping beam, etc.

A further example of a specific embodiment of the general principle is an apparatus as set out above, in which the turbine mount is a frame slidably mounted on the turbine support; and a turbine is mounted on the frame; and wherein the slidable mounting comprises a projection arranged to run in a groove in the body of the turbine support and the groove is configured to cause the turbine and frame to follow an arced path as the projection runs along the groove. Once more, the use of a groove of a well-defined shape results in the turbine taking a very predictable path during the raising process.

The apparatus may further comprise means for providing an upward force, wherein the upward force, wherein the groove comprises a first portion causing lifting of the frame and a second portion causing rotation of the frame to raise the turbine. In some cases, the turbine may be raised above the water level. As the projection translates along the path of the groove, the pivoting point of the frame changes, causing the turbines to take an arced path as they rise. The two portions of the groove each play a different role in the raising process, and allow control over the path taken by the turbines as they rise. The upward force may be provided by a winch and cable.

These examples provide a means by which: (a) the turbines and rotors can be raised above the water line for deployment of the device at the operating site and then readily deployed to the operating position; (b) one or more of the turbines can be brought to the surface in order to maintain, inspect or even replace them, or replace the turbine blades, without demobilising the device from the operating site and (c) the turbines and rotors can readily be brought above water prior demobilising the device from its operating site.

In any of the above examples, the apparatus is configured to raise the turbine above the expected water line of the turbine support. This allows for on-site inspection of the turbines. Alternatively, the turbines may not be raised to be completely above the water line, but may nonetheless reduce the draft of the apparatus, to improve the efficiency of towing the apparatus to a desired location.

In the above examples, the turbine moving in a path defining an arc may be a swinging motion.

Also disclosed herein is a buoyant assembly, comprising: a body having a first opening on a lower surface of the body; and a turret, comprising an upper end and a lower end and attachment points for coupling anchoring lines to the assembly, the turret being secured within the opening such that the lower end of the turret protrudes below the first opening, the turret being rotatable in a yaw direction relative to the body; and wherein the turret is configurable in a first arrangement in which anchoring lines are not coupled to the attachment points; and a second arrangement in which the anchoring lines are coupled to the attachment points. The turret remains secured to the buoyant assembly (within the first opening) when the assembly as a whole is in the first arrangement and while it is in the second arrangement. This has the benefit that the turret is attached to the buoyant assembly prior to anchoring the buoyant assembly at the installation site. Attaching the turret prior to anchoring allows the turret to be assembled away from the anchoring site, in calm waters, or even on land, thereby reducing the complexity of the mounting step. In addition, arranging the assembly to have the turret mounted separately provides the ability to return the turret to calm waters or land for maintenance repair and replacement, if required.

As used herein, a buoyant assembly is one which is arranged to float in water (either fresh or sea water). For example, FPSOs, boats, and floating platforms for e.g. oil extraction, wind, wave or tidal power may all be buoyant assemblies according to this description. The turret can be thought of as an integrated turret, in the sense that the assembly is provided with the turret as part of the assembly, as contrasted with other systems in which the turret is left floating in the sea while the assembly is brought to the turret and the mounting occurs in the water. For example, the turret may be permanently (but still rotatably) affixed to the assembly. Alternatively, it may be mounted such that it is difficult to remove at sea, for example to prevent damage or tampering. Not only does the present design simplify the installation process, but also certain components (e.g. electrical components and interfaces) can be made simpler and cheaper, since they are not required to float in the sea until the buoyant assembly arrives at the installation site.

Where the turret is rotatable in a yaw direction relative to the assembly, this means that the turret can rotate about a yaw axis of the assembly. Of course, by symmetry, if the turret is held still, the rotational mounting allows the assembly to rotate (yaw) around the fixed point provided by the turret.

Optionally, there is a second opening in an upper surface of the body and the first and second openings form a hollow tube extending through the buoyant assembly, optionally wherein the turret extends beyond opening in the upper surface of the buoyant assembly. Such an arrangement further simplifies the mounting step because the turret can be pulled up through the pair of openings by using a crane from above. Alternatively, the two openings and hollow tube may be formed by a pair of hinged half tubes, arranged such that actuating the hinge can be used to grip the turret as it closes and the two halves come together to form a complete tube.

The turret may be slidable within the opening or openings in a direction along the yaw axis about which the turret is rotatable. As set out above, the turret can be fit to the buoyant assembly on land. By providing a slidable turret, the extent to which the turret protrudes below the first opening can be changed, for example to allow the buoyant assembly to be rested on a slipway or quayside without the lower end of the turret getting in the way. Retracting the turret in this way can also help to reduce draft and thus reduce drag while towing the buoyant assembly to the installation site. Once the buoyant assembly is in position, the turret can advantageously be lowered so that the attachment points are below the bulk of the buoyant assembly body, to allow the anchoring lines to be spread wider (at a shallower angle to the water surface) without interfering with the assembly itself as it rotates about the turret. This also allows there to be a greater clearance between the anchor lines and any portions of the assembly which protrude below the assembly, for example water turbines and their blades.

For example, the first arrangement may further correspond to the turret being in a first position in which the turret is arranged at a full extent of sliding in a first direction, such that the turret protrudes a first distance from the first opening; and the second arrangement may further correspond to the turret being in a second position in which the turret is arranged at the full extent of sliding in a second direction, opposite the first direction, such that the turret protrudes a second distance from the first opening, wherein the second distance is larger than the first distance. As set out above, arranging the turret in each of these positions may benefit both the mounting and anchoring stages of the buoyant assembly.

When the turret is slidable, the opening in the lower surface of the body may be located in a recess having a depth greater than the distance by which the turret protrudes below the first opening when the turret is in the first position. Similarly, when the turret is not slidable, the opening in the lower surface of the body may be located in a recess having a depth greater than the distance by which the turret protrudes below the first opening. This location in a recess allow the buoyant assembly to have a broadly flat base, which can be set on a flat surface on land to assist in mounting the turret to the buoyant assembly, while the turret, once mounted, need not contact the flat surface. This can provide stability to the assembly during the entire part of the procedure while the turret is being mounted. In each case, recess simply means that there is a region which is set back from the main outer surface of the hull. For example there may be a conical or cylindrical hole in the lower surface of the assembly. Equally, the hull may curve upwards sharply at an outer edge to provide an overhang, in which the first opening is located.

Optionally, the attachment points may comprise at least one primary line coupled at its proximal end to the turret. In some embodiments, there may be two or more primary lines equidistantly spaced around the turret. A primary line is strong enough to provide part of the anchoring link, but is distinguished from an anchoring line in that a primary line is significantly shorter than an anchoring line. A primary line is connected directly to the turret to provide a means by which the anchoring lines can be connected to a point separated from the turret. Specifically, primary lines may be between 5 and 15 metres long, which is too short to reach the bottom of most bodies of water which are of practical interest. However, the purpose is to allow the anchor lines to be attached at places other than the turret. For example, the buoyant assembly may include means for reversibly coupling a distal end of the or each primary line to the buoyant assembly. The primary lines can be laid on the deck or upper surface of the buoyant assembly, and the anchor lines can be connected to the buoyant assembly (via the primary lines) on the surface of the assembly. This makes the connection process safer and simpler than having to access the turret directly. Each primary line may be coupled to a single anchoring line, or to multiple lines. For example, each primary line may be configured to couple to two anchoring lines. This allows a spread anchoring system to be implemented.

The or each primary line may be coupled at its proximal end to a radially arranged flange at the lower end of the turret. The purpose of the flange is to space the point where the primary lines couple to the turret away from the centre of the turret. Since the primary lines are flexible they can provide very little resistance to the twisting of the turret, e.g. via the whole assembly realigning itself with local current flows, which could lead to the anchoring lines/primary lines becoming tangled or overly stressed. By providing a rigid section between the centre of the turret and the attachment point for the primary line, the torque provided by the primary lines to counter rotations of the turret is increased, thereby reducing the likelihood of the turret twisting.

Where primary lines are used, the distal end of the or each primary line can include a connector for attaching anchoring lines to the buoyant assembly. This connector provides a convenient means by which one or more anchoring lines may be attached to each primary line. For example, in some examples, the or each connector is configured to couple to two anchoring lines.

The turret may have an axial channel configured to receive a power cable. When the buoyant assembly is for generating power, e.g. as a floating wind, wave or tidal power system, the power must be transferred to a place where it is required. Typically this will be by means of a subsea cable. It is generally desirable that the connection point for mechanically anchoring the assembly to the water bed is not the same as the connection point for such electrical cables, in order to avoid stressing the electrical cable. By feeding the cable through the turret, the mechanical (i.e. load bearing) and electrical connections can be separated, thereby advantageously allowing each to perform its intended function unimpeded by constrains specific to the other. To this end, there may be an electrical interface, such as a slip ring, at the upper end of the turret for connecting to the power cable.

The assembly may further comprise a cable pull line for attaching to a power cable and assisting in pulling the power cable through the channel. Feeding a cable through a narrow opening may be difficult in rough seas, and a cable pull line can greatly help to ensure that the cable is correctly seated.

Also disclosed herein is a buoyant turbine apparatus, comprising: a first elongate hull; a second elongate hull having a length approximately equal to the length of the first hull; a third elongate hull located between the first and second hulls; one or more cross beams joining the first and second hulls to a distal end of the third hull; a turbine assembly comprising at least one turbine mounted between the first and third hulls; and a turbine assembly comprising at least one turbine mounted between the second and third hulls; wherein each of the hulls is aligned with the other hulls at a distal end of the turbine assembly; and wherein the third hull has a turret anchoring system at its proximal end. The third hull provides a convenient and stable location for anchoring the apparatus to the water bed, allowing it to yaw to align with local currents. This separation allows the anchoring system to have a large footprint, providing stability. Note that in order to provide these benefits, the first and second hulls need not be joined to the third hull at the distal extremity of the third hull, but merely towards the distal end. Put another way, the point of contact between the cross beam and the third hull need not be at the extreme distal end of the third hull, but is located in a distal portion of the third hull so that the first and second hulls lie alongside the third hull, near to the distal end of the third hull.

In some examples, the central hull has additional buoyancy (e.g. relative to the other two hulls), in particular concentrated towards the front (or proximal) end which can help to provide resistance to pitching moments. In other examples, the central hull may be wider at the proximal end (the end where the turret anchor is located, i.e. upstream). In yet further examples, the third, central, hull is longer than the first and second hulls. The additional length of such an elongated third hull can protrude beyond the proximal ends of the first and second hulls. This arrangement positions the turret anchoring system further away from the turbines, as well as allowing additional buoyancy to be provided at the front (proximal end) of the third hull. The combination of increased buoyancy and an elongated central hull allows resistance to pitching moments by increasing the lever arm of the third hull. In some examples, the above features in which the central hull is elongated hull, wider at the front (proximal) end, or more buoyant at the proximal end may be combined together to improve resistance to pitching.

For example, in some cases the third hull is at least 1.5 times the length of the first or second hull. Additionally, or alternatively, in some cases the third hull is at least 1.5 times as long as the distance of the turbines below the water line, when the assembly is in use and the turbines are in the first configuration. These dimensions allow for a widely spread mooring system, even in relatively shallow waters.

The turbine assemblies may comprise a plurality of turbines between the first and third hulls and/or a plurality of turbines between the second and third hulls. Increasing the number of turbines can increase the amount of power generated by the apparatus as a whole.

The turbines may be configurable in a first configuration in which they are below the expected water line of the assembly, and a second configuration in which the turbines are above the expected water line of the assembly. The two configurations allow a user to raise the turbines for inspection, maintenance, towing etc., and lower them for power generation.

The turbine apparatus may further comprise platforms positioned or positionable close to the turbines when they are in the second configuration. This provides a convenient place for a worker to stand for carrying out repairs and/or inspections.

The turbine apparatus may further comprise any of the apparatuses for raising turbines relative to a turbine support set out above, which may be used for configuring the turbines in the first or second configurations, and to transition the turbines between these two configurations. In this case, the three hulls form the turbine support which the turbine is raised relative to.

Optionally, the third hull comprises control systems for the entire assembly. This centralisation allows the first and second hulls to be much simpler and cheaper to manufacture.

Optionally, the third hull comprises additional buoyancy relative to the first and second hulls. This can help provide stability to the apparatus.

The buoyancy of the third hull may be variable. This allows the apparatus to adopt different turbine configurations without sacrificing stability.

The third hull may further comprise a hydrofoil. Hydrofoils can help to stabilise the assembly and align it with local current flows.

In some cases, the turbines are raised in such a way that they are located beyond the distal end of the hulls. In other cases, the separation between adjacent hulls is sufficient to raise a turbine assembly between the adjacent hulls. This allows the turbines to be brought up between the hulls, saving space and improving stability.

One or more of the hulls may be streamlined in at its proximal end. This improves the efficiency of towing apparatus to and from the desired mooring location.

The turbine assembly described above may include the anchoring system described above.

Also described herein is a method of anchoring a buoyant assembly having a turret anchoring system, comprising: (a) attaching the turret of the anchoring system to the buoyant assembly; (b) transporting the assembly to an installation site; and (c) attaching a plurality of anchoring lines to the turret. As described above, mounting the turret separately, and prior, to anchoring the assembly allows the installation of the turret to be simplified, since it can occur either in calm waters, or even on land.

The turret may be slidable in a generally vertical direction, between a first position in which the turret is at a highest position and a second position in which the turret is at a lowest position. As set out above, the turret can be fitted to the buoyant assembly on land. By providing a slidable turret, the extent to which the turret protrudes below the first opening can be changed, for example to allow the buoyant assembly to be rested on a slipway or quayside without the lower end of the turret getting in the way. Retracting the turret in this way can also help to reduce draft and thus reduce drag while towing the buoyant assembly to the installation site. Once the buoyant assembly is in position, the turret can advantageously be lowered so that the attachment points are below the bulk of the buoyant assembly body, to allow the anchoring lines to be spread wider (at a shallower angle to the water surface) without interfering with the assembly itself as it rotates about the turret.

As set out above, it may be advantageous for the turret to be in particular configurations during different parts of the installation process. For example, the turret may be in the first position during step (a). Additionally or alternatively the turret may be in the first position during step (b). The turret may be placed in the second position between steps (b) and (c), or during step (c) or indeed after step (c).

A first end of each of the anchoring lines may be anchored to the sea bed and a second end of each of the anchoring lines may be attached to a buoy at the installation site, prior to arrival of the assembly at the installation site. Optionally, a power cable may also be attached to the buoy, for example for transfer of power from a floating tidal, wave or wind power station to land.

In the case where there is a power cable attached to the buoy, the power cable can be advantageously connected to the assembly by (d) moving the power cable to a holder on an upper surface of the buoyant assembly. Further optionally, the method may further comprise (e) pulling the power cable through a hollow core of the turret. Further optionally, the method may include (f) attaching the power cable to an electrical interface on the buoyant assembly.

Step (c) may advantageously comprise attaching a first anchoring line at slack high tide in the anchoring site. This allows the first line to be connected to the assembly while there are no forces due to local currents on the assembly, thereby simplifying the installation. In some examples, the first anchoring line is an upstream anchoring line relative to the direction of flow after slack high tide. This means that when the tidal current resumes, the assembly is stably secured in position, to allow the remaining anchoring lines to be attached.

Once step (c) has been performed, the anchoring lines may be tightened. This allows the tension to be altered with the apparatus secured in place, to adapt the mooring system to the local conditions.

The buoyant assembly used in this example may be the three-hulled variation described above, with the associated advantages set out above.

Turbine systems generate considerable thrust in operation. As discussed above, most tethered buoyant turbine assemblies are arranged such that the turbines are offset from the main body of the assembly, typically hanging down into the water beneath the main body of the assembly. This offset combined with the large thrust causes significant pitching motions of the assembly, since the large thrust force generates a large moment due to the offset of the turbine. This pitching moment can cause the turbines to become misaligned with the local fluid flow, reducing their effectiveness, and can also strain the mooring system.

Also disclosed herein is a mooring system to address this problem. Specifically a mooring system for a turbine assembly, comprising: an upstream anchoring point, connected by an anchoring line to an upstream buoy, the upstream buoy being connected by a plurality of tethers to an upstream end of the turbine assembly; and a downstream anchoring point, connected by an anchoring line to a downstream buoy, the downstream buoy being connected by a plurality of tethers to a downstream end of the turbine assembly. In some examples, the tethers connecting the buoys to the turbine assembly are substantially horizontal. The buoys as intermediate points on the mooring system assist the tethers in being arranged horizontally. In some cases, the entire tether is essentially horizontal. In others, the tether attaches to the turbine assembly at an approximately horizontal angle, but sags a little between the buoy and the turbine assembly. In either case, the vertical component of the mooring system is substantially reduced by the presence of the buoys. This helps to reduce pitching moments in the system.

In some cases, the turbine assembly comprises a multi-hulled vessel, and there is one tether per buoy per hull. This provides a greater degree of stability in the mooring system, since other yaw motions are also resisted.

Each buoy may have a buoyancy of at least 10 tons. This provides a good level of stability to the system.

A mooring system according to any one of claims 37 to 40, wherein each buoy has a length of at least 5m and a diameter of at least 1m. These dimensions allow the buoy to be easily made to have sufficient buoyancy. Each buoy may be hollow, air filled, foam filled, etc., all of which are readily available materials.

The mooring system may have substantially no vertical force component. Moreover, the mooring system may act to counteract pitching forces. As set out above, pitching forces can cause an unstable mooring, so counteracting these, by removing the vertical component of the mooring system, improves the stability of the mooring system.

This buoyant mooring system may advantageously be used with many of the floating turbine devices described above, since reduced pitching can help to stabilise the floating turbine device, even under strong flow conditions. For example, the turbine assembly having first, second and third elongate hulls can advantageously be moored using the buoyant mooring system. Three mooring lines can be attached between the upstream buoy and each of the three hulls. Three further mooring lines can be attached between the downstream buoy and each of the three hulls. In this way, a stable anchoring of the turbine assembly can be achieved.

The apparatus for raising a turbine relative to a support can be used with the turbine assembly having first, second and third elongate hulls. This combination provides a convenient functionality to the three-hulled variant.

Similarly, the turret mooring system can advantageously be used with the apparatus for raising a turbine relative to a support. The turret mooring can be arranged to bring the anchoring cables to the apparatus in such a way that the turbines are clear of the anchoring cables even when deployed. The ability to selectively raise and lower the turbines simplifies the installation process of the assembly, since the turbines can be raised while anchoring the assembly in place, and then lowered to produce power.

The turret mooring can advantageously be used with the turbine assembly having first, second and third elongate hulls. A particular problem with the combination of a turret mooring system and a floating turbine assembly is that the draft of the turbines is so large that there is a risk that the turbines will hit the mooring lines as the assembly yaws in changing currents. This can lead to mooring line damage, and eventually to a failure of the anchoring system. By providing an elongate central hull, the horizontal distance between the turret mooring and the turbines is increased. This allows a greater draft at the turbines for a fixed angle of the anchoring cables. Equivalently, for a fixed draft, this allows the anchoring cables to make a smaller angle with the horizontal, thereby providing a more stable anchoring system. The overall mass and complexity of such a device is kept relatively low, since the outer pair of hulls does not need to be extended in this way, due to the nature of the turret mooring.

Embodiments of the invention will now be described in detail, with reference to the figures, in which:
Figure 1A shows a perspective view of an example of a turbine assembly including apparatus for raising the turbines, in which the turbines are in a deployed configuration;
Figure 1B shows a perspective view of the turbine assembly of Figure 1A, in which the turbines are in a raised position;
Figure 1C shows a side elevation of the turbine assembly in Figures 1A and 1B, providing detail of the operation of the apparatus for raising the turbines;
Figure 2A shows a perspective view of another example of a turbine assembly, including a second apparatus for raising the turbines, in which the turbines are in a deployed configuration;
Figures 2B to 2D shows a side elevation of the turbine assembly in Figure 2A, at progressive stages of the turbines being raised by the apparatus;
Figure 3A shows a perspective view of yet another example of a turbine assembly including apparatus for raising the turbines, in which the turbines are in a deployed configuration;
Figure 3B shows a perspective view of the turbine assembly of Figure 3A in which the apparatus has been operated to partly raise the turbines;
Figure 3C shows a perspective view of the turbine assembly of Figure 3A and 3B in which the apparatus has been operated to fully raise the turbines;
Figure 4A shows yet a further example of a turbine assembly, including apparatus for raising the turbines, in which the turbines are in a raised configuration;
Figure 4B shows the turbine assembly of Figure 4B, in which the turbines are in a deployed configuration;
Figure 4C shows a plan view of the turbine assembly of Figure 4B, including the anchoring system;
Figure 4D shows a side elevation of the turbine assembly shown in Figure 4C;
Figure 5A shows a side elevation of a turret mooring system prior to installation at an installation site;
Figure 5B shows a side elevation of the turret mooring system of Figure 5A during installation at an installation site;
Figure 5C shows a side elevation of the turret mooring system of Figures 5A and 5B during a later installation step at an installation site;
Figure 5D shows a side elevation of the turret mooring system of Figures 5A to 5C during a yet later installation step at an installation site; and

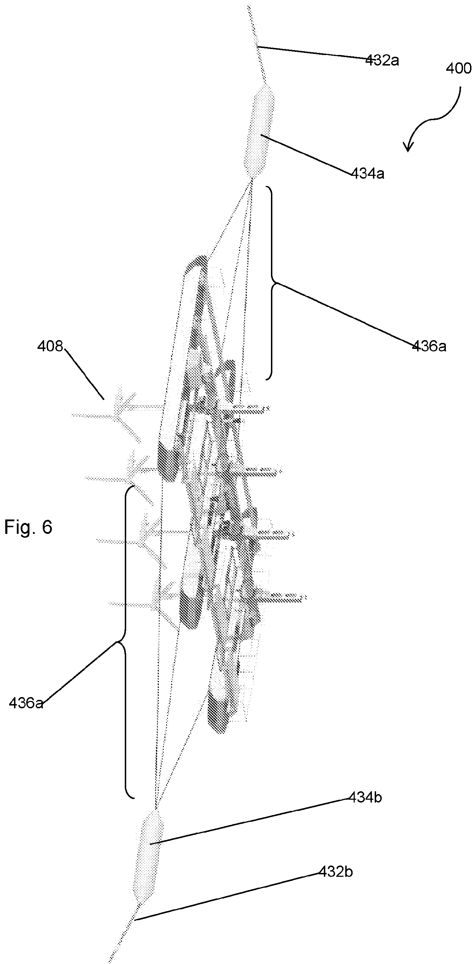

Figure 6 shows a perspective view of a mooring system, suitable for mooring the turbine assemblies of Figures 1 to 5.

In general, a floating tidal energy device is moored at its operating site. Tidal turbines and their rotors are held beneath the hulls of the device on supporting structures so that the turbines can rotate when ocean or river currents flow at the operating site, thus generating electricity. In this operating condition the overall draft of the device, including the turbines and rotors, is large. For deployment of the device to its operating site, and for subsequent maintenance, inspection and demobilisation, it is desirable that the turbines and their rotors be above the water so that the draft of the device is solely the draft of the hulls of the device at these times. In the examples presented herein, the structures from which the turbines are suspended can be rotated downwards about bearings in order to deploy the turbines, and subsequently the turbines can readily rotated upwards again, so they are out of the water prior to demobilisation of the device. This rotational, or swinging, motion is combined with a linear movement. The combination of these motions allows the provision of a compact and efficient turbine assembly.

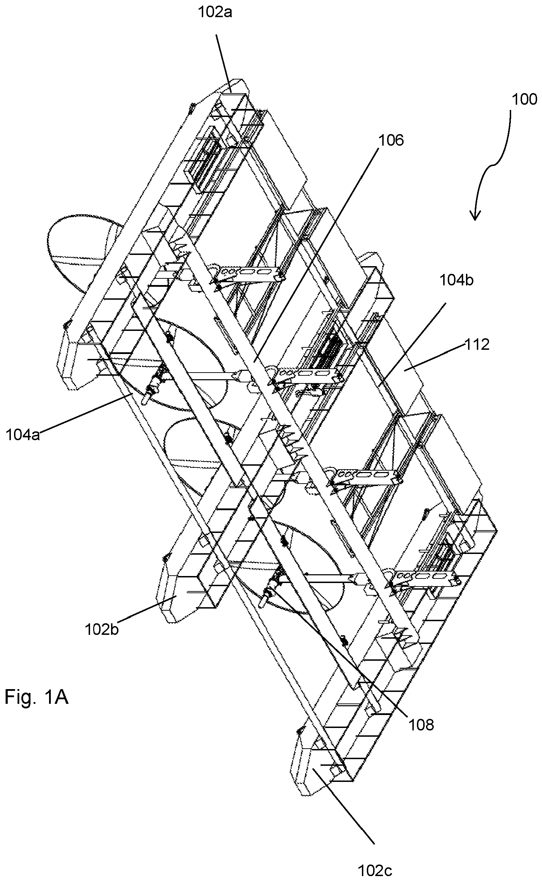

Figure 1A shows an example of a floating turbine assembly 100 which uses the combination of swinging and linear motion. As shown, three buoyant hulls 102a-c (collectively referred to as 102) are arranged in a trimaran configuration. Each hull 102 is streamlined in a direction corresponding to the intended local current flow. The hulls 102 are held a fixed distance from one another by crossbeams 104a-b (collectively referred to as 104). In addition, a beam 106 is provided, to which four turbines 108 are mounted, each at a lower end of a turbine mount in the form of a telescoping support 110. Two turbines 108 are mounted between each adjacent pair of hulls 102.

In the figure, the turbines 108 are shown in a yawed orientation, in that the turbines 108 are oriented transverse to the intended current flow. In normal operation, the turbines 108 would be rotated approximately 90° to the orientation shown, in order to align them with local current flows. However, in preparation for raising the turbines 108, it is beneficial to yaw them in order to reduce the forces generated by their interaction with local currents. In addition, since the diameter of the blades can be quite large, yawing the turbines 108 prior to raising them can reduce the spacing required between the hulls 102. This is particularly important for smaller designs where there may be only a single turbine 108 between adjacent hulls 102.

Also shown in the figure are four platforms 112, one for each turbine 108. The platforms 112 are mounted on a set of rails, allowing them to move towards or away from their corresponding telescoping supports 110.

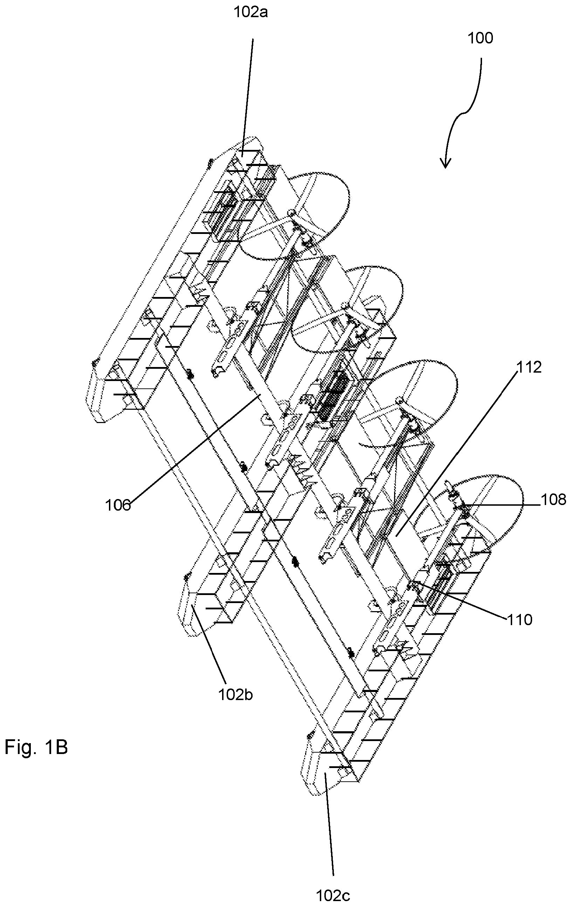

Consider now Figure 1B. Here, the same floating turbine assembly 100 is shown as that in Figure 1A, but the turbines 108 have been raised above the expected water line of the assembly when in use. It can be seen that the telescoping supports 110 now lie substantially horizontally, and the turbines 108 are clear of the water. Inspection or maintenance of the turbines 108 can be achieved from the respective platform 112. For example, two of the platforms 112 are shown having moved closer to the turbines in Figure 1B (as compared to their positions in Figure 1A). In order to access all parts of the turbine 108, the platform 112 can be moved along their rails, independently of one another, if required. As shown the platforms are at their furthest distance from the beam 106, which is the default position for the platforms 112 when the turbines 108 are being raised, in order to allow sufficient space for the turbines 108 to swing up without colliding with part of the assembly 100.

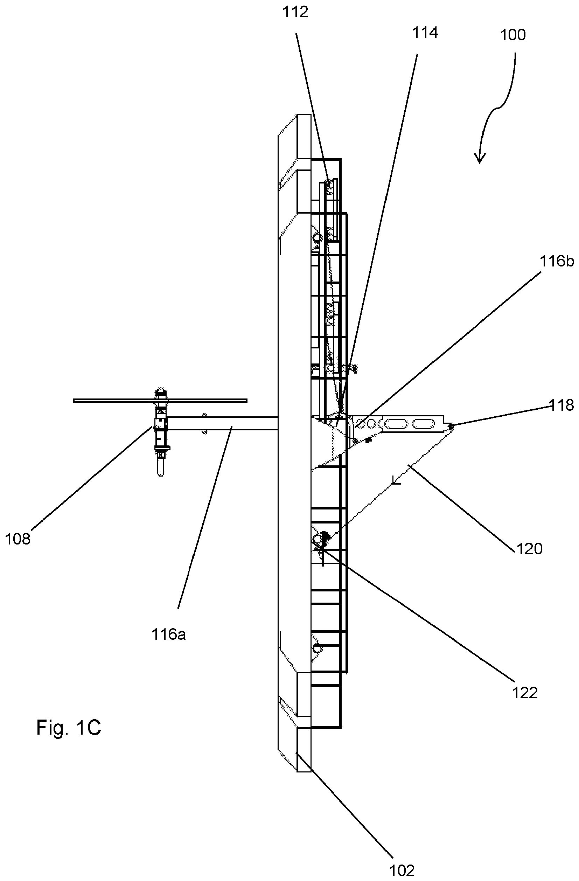

Figure 1C shows a side elevation of the assembly shown in Figures 1A and 1B, which illustrates the apparatus for raising the turbines 108, in order to cause the apparatus to transition from the arrangement shown in Figure 1A to the arrangement of Figure 1B. As shown, the telescoping supports 110 are pivotally mounted to the rest of the assembly 100. In some cases, the pivotal mounting is provided by mounting the beam 106 in such a way that it can pivot about its axis. In other cases, the telescoping supports 110 are pivotally attached to the beam 106, which therefore need not rotate. Pivotally mounting the supports 110 rather than the beam 106 allows the turbines 108 to be raised independently of one another.

In any case, as shown in Figure 1C, the telescoping support 110 is able to pivot relative to the assembly 100 about an axis 114. The telescoping support comprises a lower portion 116a, which supports the turbine 108 and an upper portion 116b. In this case, the lower portion 116a is able to fit inside the upper portion 116b, which is hollow. This allows the lower portion (which here is an inner portion) 116a to slide within the upper (or outer in this case) portion 116b, thereby reducing the overall draft of the assembly 100.

The upper portion 116b is provided with a pulley 118 at its upper end. A cable 120 attached to lower portion 116a and is fed over the pulley 118 to a winch 120. When the winch is activated, the cable pulls on the lower portion 116a of the telescoping support 110, raising the lower portion 116a, by forcing it to slide within the upper portion 116b. In Figure 1C, the arrow on the cable shows the direction of force applied to the telescoping support 110 by the action of the winch 120. At a predetermined height of rising, stops on the outer part of the lower portion 116a engage with the upper portion 116b, preventing further rising of the lower portion 116a relative to the assembly 100. At this point, further operation of the winch causes the telescoping support to pivot backwards, thereby swinging the turbine 108 at the end of the telescoping support 110. The winch 122 may be operated continually throughout the operation to fully raise the turbine 108 above the waterline in a single operation. Note that the design of the apparatus for raising the turbines 108 is arranged that a single device, in this case the winch 122, can provide a constant motion, which causes a combination of linear and rotational motions: the telescopic slide and the pivoting swing respectively. Any suitable device for providing an upward force could be used, for example: pneumatics/hydraulics, rack and pinions etc.

Although such a mechanism is not shown, the turbines 108 may be configured to yaw as they rise. This may be achieved by providing each turbine 108 with a motor, or other rotational device, to allow control of the yaw angle. In conjunction with a brake, such a system could also be used to align the turbine 108 more precisely with local current flow, as well as controlling and fixing the alignment during a raising operation.

Alternatively, the lower portion 116a may include protrusions on its outer surface and there may be indentations on the inner surface of the upper portion 116b. As the lower portion 116a slides into the upper portion 116b, the protrusions interact with the indentations and cause a yawing motion. As a specific example, an external screw thread on the lower portion 116a would interact with a corresponding internal screw thread on the upper portion 116b to cause a rotational (yawing) motion of the lower portion 116a, which would bring the turbine 108 with it, rotating it the desired amount during the raising operation. Note that the single raising device (e.g. winch 122) is thereby able to provide a three part motion (slide, yaw and swing) in a single motion.

It is possible to arrange the turbines 108 to yaw in either direction as desired. In some cases, they always yaw in the same rotational direction as one another, while in others, adjacent turbines 108 yaw in opposite rotational directions. In either case, some assemblies share a platform 112 between adjacent turbines 108, so that fewer platforms 112 need be provided. For example, a single sliding platform 112 may be provided between a pair of platforms to inspect one part of the turbine 108, while other parts of the turbine 108 may be inspected by standing on a portion of the nearest hull 102.

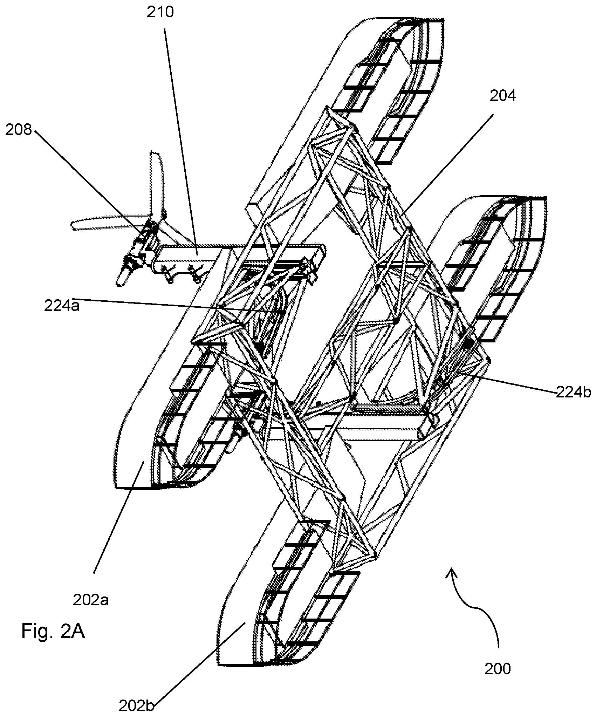

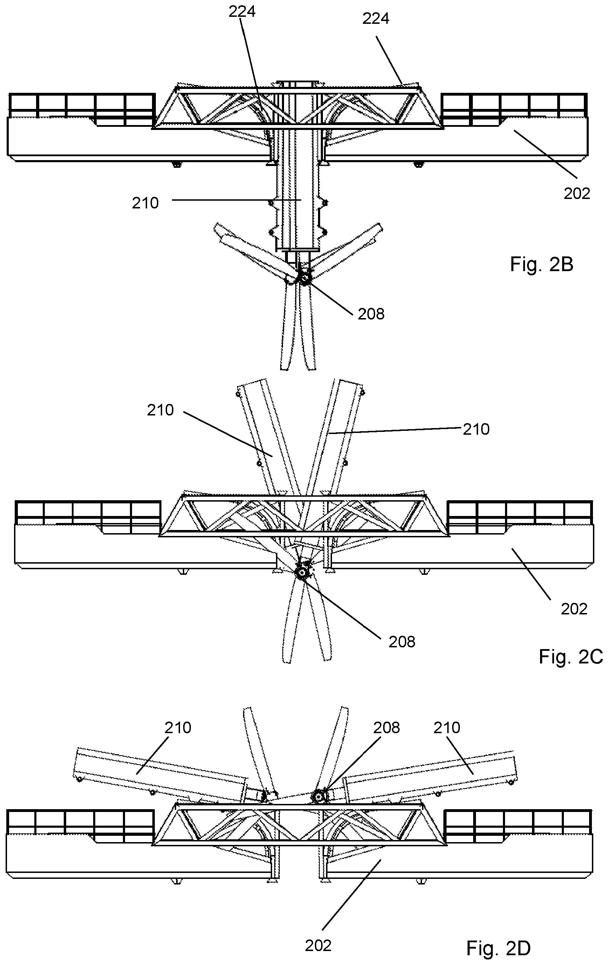

Considering Figure 2A now, there is shown another example of a buoyant turbine assembly 200 which uses a combination of linear and rotational motions to raise turbines. Here, the assembly comprises a pair of symmetric split hulls 202a and 202b (collectively referred to as 202). Each hull is similar to those in Figures 1A to 1C, but instead of mounting the turbines between adjacent hulls as in those figures, the assembly 200 in Figure 2A has hulls formed as two parts, with a gap through which a turbine support beam 210 extends, to provide a suitable mounting point for a turbine 208. The various parts of the hulls 202 are joined together to hold them in a fixed location relative to one another by a frame 204.

The frame 204 also houses a rail 224a and 224b (collectively referred to as 224) for each turbine. The turbine support beams 210 are each joined to a rail 224 such that they can slide along the rail.

The process of raising a turbine 208 using this apparatus is shown in detail in Figures 2B to 2D, which show the progression from the deployed configuration to the raised configuration. As an upward force is applied to the turbine support beams 210, the point of contact between each turbine support beam 210 and the assembly 200 changes as the turbine support beam 210 is dragged along the rails 224. Due to the curvature of the rails 224, the turbine support beam 210 rotates as it moves, once more causing a swinging motion of the turbine 208. This process continues until the turbine support beam 210 is substantially horizontal. Even once the support beam 210 is substantially horizontal, it may continue to move along the rails to better position the support beam 210 and turbine 208 for stability and/or inspection etc. Once more, the arrangement of the rails 224 allows a single device (such as a winch and cable or any other suitable device such as those proposed for use in the arrangement of Figures 1A-C - not shown) to provide a relatively complex motion involving linear and rotational aspects. The exact path taken by each of the turbines is determined by the specific shape of the rails.

In addition to the rotational and linear motions provided by the rails, other motions are possible. For example, the turbine support beams 210 can be telescoping beams such as those described in respect of Figures 1A to 1C. This allows a vertical motion to occur prior to the support beam 210 being dragged along the rails. A further development of this idea is to include the yawing motion described above, whereby protrusions and indentations interact to cause the internal part of the telescoping beam to yaw during the raising process.

In the case shown in Figures 2A to 2D, the split hull arrangement includes a yawing motion of the turbines 208 as they are raised in order to allow the gap between the two parts of each hull 202 to be relatively small. It is therefore particularly advantageous to include a yawing feature as part of the raising process in these designs. In other examples of this design, the hulls are not split and the turbines are held between two adjacent hulls, much like the arrangement shown in Figures 1A to 1C. In this case, the rails 224 run up onto the frame 204 instead of onto the hulls 202.

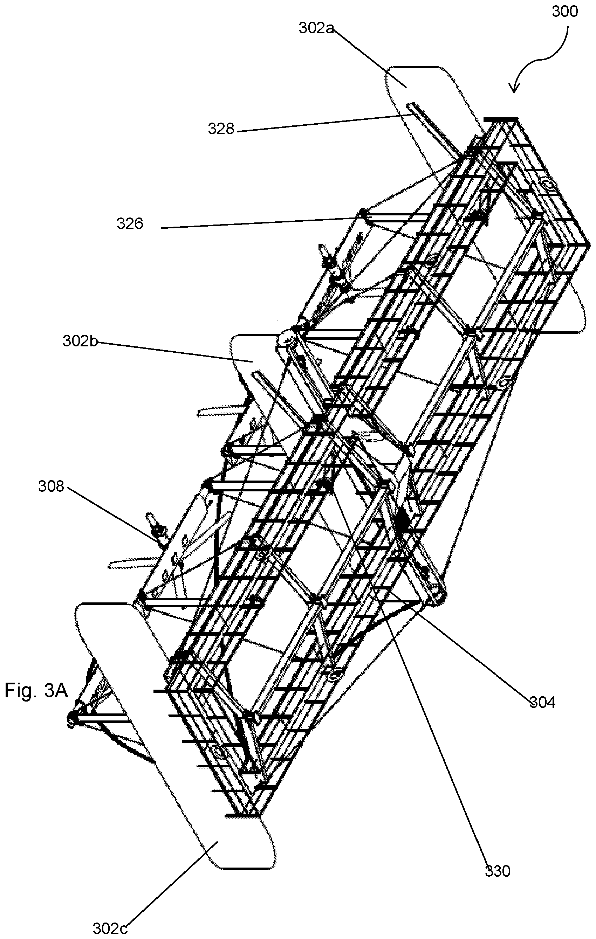

Turning now to Figure 3A, which shows a third example of a turbine assembly 300 using the general principle of combined rotation and linear motion to raise a turbine. Once more, the assembly 300 comprises three hulls 302a-c (collectively referred to as 302) arranged in a trimaran arrangement. The three hulls 302 are held spaced apart from one another by a support structure 304, comprising cross beams. Four turbines 308 are held beneath the assembly 300 on a frame 326. The upper part of the frame 326 is held to the assembly 300 by virtue of an interaction with grooves 328 running along the internal sides of the hulls 302 (that is, the side of any given hull 302 which faces another hull 302). The frame 326 engages with this groove by virtue of a projection 330 provided at the upper portion of the frame.

The trimaran arrangement provides space for a frame 326 to hang beneath the assembly between each adjacent pair of hulls 302. Therefore, two frames 326 each having two turbines 308, are provided in the trimaran arrangement.

In order to raise the turbines 308, an upward force is applied to them via the frame. The upward force causes the frame 326 and turbines 308 to swing by pivoting about the projection 330, as well as moving in a linear motion as the projection 330 runs along the groove 328. In this way, the rotational motion is provided by the pivotal movement of the frame 326 around the contact point provided by the projection 330 while the linear motion is provided by moving the pivot point itself, as the projection 330 traverses the groove 328.

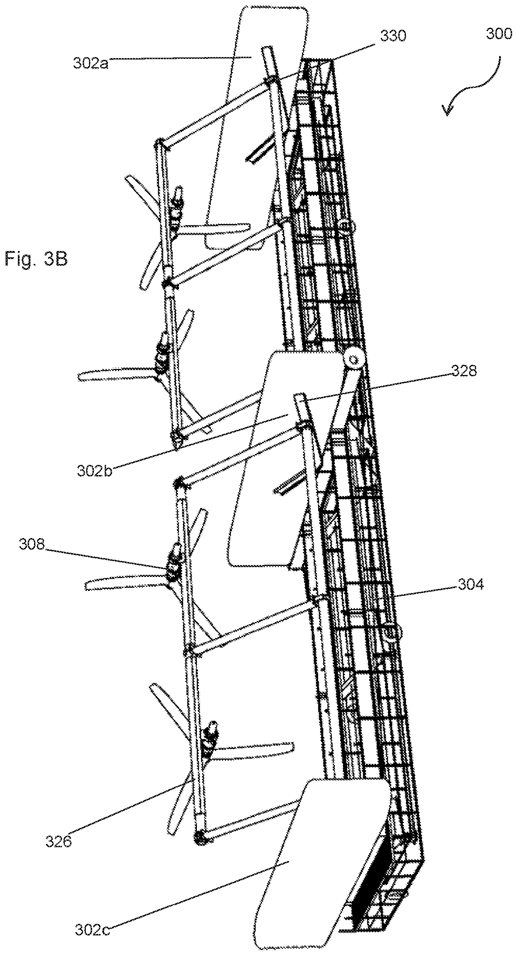

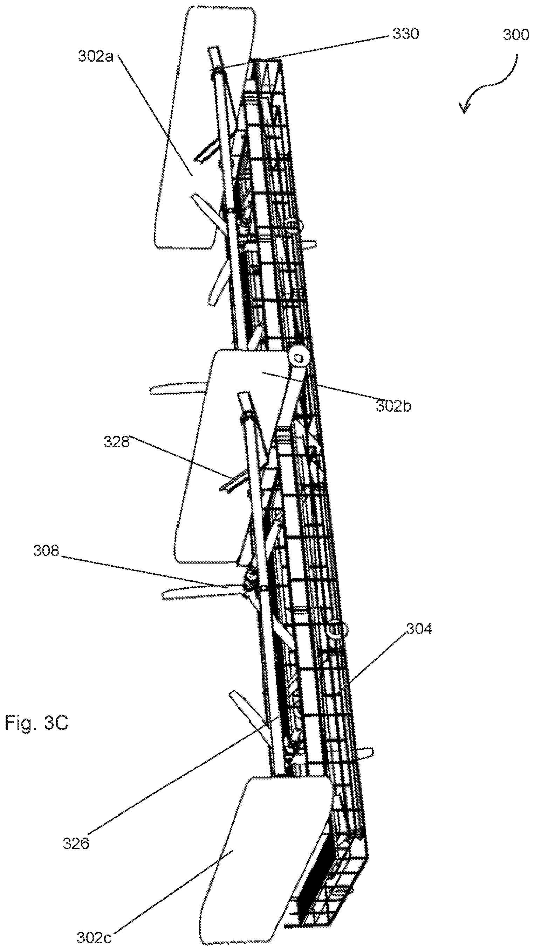

Figures 3B and 3C illustrate progressive moments in the raising process as the projection 330 slides along the groove 328. The groove 328 has an inverted V-shape, meaning that the initial part of the linear motion of the projection is angled upwards, prior to continuing at a downwards angle. The first stage of the movement is primarily vertical as the projection moves along the first leg of the inverted V, and it becomes more arced as the projection runs along the second leg of the inverted V. When the raising operation is complete, the turbines 308 are above the local water line as shown in Figure 3C. Although not shown, slidable platforms such as those in Figures 1A-C (element 112) could be included to allow close inspection and maintenance of the turbines when they are raised.

As before, any suitable means of providing the upward force may be used, but a winch and cable system with appropriately placed pulleys may be used to complete the entire movement using a single device.

The turbine raising systems described above are shown in the context of a purposebuilt floating platform. However, the same principles could equally be applied to turbines mounted on fixed structures such as jetties, quays etc. Similarly, each of the turbine assemblies shown has two or four turbines, but the principles can be applied equally to any number of turbines. In all cases, the turbines can be locked in the raised position by applying a continued upwards force, or by e.g. locking the winch (or other device). When the force is removed or the winch or other device is unlocked, the process for lowering the turbines proceeds by performing the raising operation in reverse. During such a procedure, a small upward force may still be applied to the turbines in order to slow their descent. This can help to prevent damage to the turbines and/or the assembly as a whole.

In general, each of the telescoping supports shown in the examples comprise an inner portion sliding within the outer portion, while the outer portion remains fixed relative to the turbine assembly. The important aspect of this interaction is the relative motion between the two portions. Therefore, without affecting the general operation of the assembly, the outer part could be arranged to slide over the inner part, which remains fixed relative to the rest of the assembly.

Usually, when multiple turbines are present, yet not all turbines are required to be raised (for example, when only one turbine has developed a fault, and an inspection is required), the turbines will be raised in a symmetric manner, to ensure that no unwanted yaw forces are generated by an asymmetric turbine deployment. For example, consider Figure 1A. In this example, if the turbine 108 closest to hull 102c is raised on its own, the distribution of thrust forces acting on the assembly will change. Specifically, the combined thrust from the two turbines 108 between hulls 102a and 102b will be about twice as large as that from the one remaining turbine 108 between hulls 102b and 102c. This unbalanced thrust causes the assembly 100 to yaw, putting unwanted and unbalanced strain on the anchoring system. This situation can be significantly improved by also raising the turbine 108 closest to hull 102a. In general, raising turbines in pairs such as those highlighted above which follow the symmetry of the assembly is beneficial in preventing undue strains on the anchoring system.

While most of the arrangements shown in Figures 1A to 3C show the turbines swinging in a pitching direction, it is also possible in some embodiments to raise the turbines by incorporating a roll motion (or indeed a combination of the two). The mechanisms for doing this are very similar to those set out above, except that the lifting apparatus is rotated 90° relative to the rest of the assembly (to give a roll motion instead of a pitch), or by some other angle (to give a combination of pitch and roll).

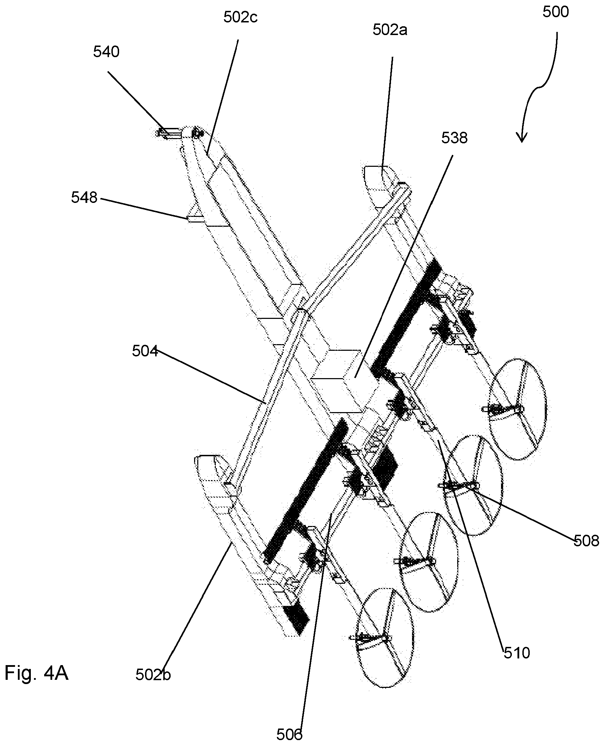

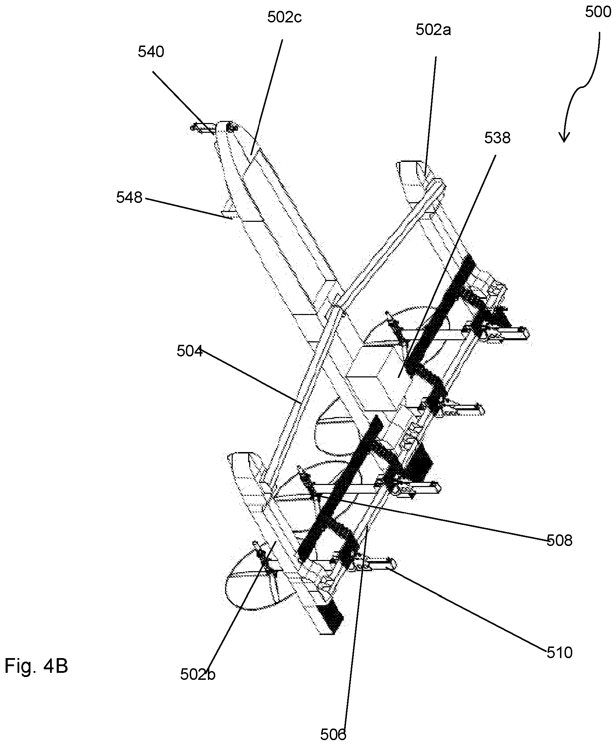

Turning now to Figures 4A and 4B, there is shown yet another turbine apparatus 500. The turbine apparatus 500 comprises three elongate hulls 502a-c (collectively referred to as 502) joined together in a trimaran arrangement by a pair of cross beams 504. The hulls comprise first and second outer hulls 502a, 502b which have approximately equal lengths as one another. The third, central hull 502c is longer than the first and second hulls 502a, 502b. In some examples, the central hull is at least 1.5 times the length of the outer hulls.

The cross beams 504 may comprise a pair of beams, one for joining the first hull 502a to the third, central hull 502c and another for joining the second hull 502b to the central hull 502c. Alternatively, the cross beams bay be integrally formed together to form a single cross beam. Indeed, there may be more than one such cross beam (or set of cross beams) spaced along the length of the hulls for additional rigidity.

All three hulls 502 are approximately aligned with one another at a distal end of the turbine apparatus 500, meaning that the third, central hull 502c extends beyond the proximal end of the first and second hulls 502a, 502b. A turret anchoring system 540 is provided at the proximal end of the central hull 502c. This arrangement allows the turbine apparatus 500 to rotate about the point where the turret anchoring system 540 connects to the turbine apparatus 500 in response to changing local current flow direction. In particular, when the turbine apparatus is installed in a tidal location, the apparatus 500 may rotate approximately 180° to allow the apparatus 500 to derive power from the tide going in and the tide going out again. Because of this free rotating arrangement, the proximal end of the apparatus 500 is also the upstream end of the apparatus 500. The rotational performance of the assembly is enhanced by a hydrofoil 548 mounted on the underside of the central hull 502c. This can also improve the handling of the apparatus in water currents.

In some embodiments, the three hulls 502 are not aligned at their distal ends. Instead, there may be a small offset between the distal ends of the hulls. Usually, but not always, the first and second hulls 502a, 502b are aligned with one another along their whole length, but their distal ends may be offset from the distal end of the third hull 502c.

Two turbine assemblies are mounted between adjacent hulls 502. In the example shown in Figures 4A and 4B, each turbine assembly comprises two turbines 508, meaning that there are two turbines 508 mounted between the first and third hulls 502a and 502c, and there are two further turbines 508 mounted between the second and third hulls 502b and 502c. In some examples, the number of turbines 508 in a turbine assembly may be greater or smaller than two.

A comparison of the view of the apparatus shown in Figures 4A and 4B shows that the turbines may be raised above the expected water level; Figure 4A shows the turbines 508 in a raised configuration, while Figure 4B shows them in a lowered, or deployed, configuration. In Figures 4A and 4B, the apparatus used to raise the turbines is that described in respect of Figures 1A to 1C above. However, any of the apparatuses described herein for raising turbines may be included. Although not shown in Figures 4A and 4B, a moveable platform can be included to facilitate inspection and/or maintenance of the turbines when they are in the raised position.

The turbine assemblies are shown as being raised in such a way that the turbines 508 hang from the distal end of the apparatus 500. By bringing the turbines 508 up in this location, the hulls 502 of the apparatus can be spaced slightly closer together than they otherwise could be. However, in some arrangements, the turbines are raised between the hulls, in which case, the spacing of the hulls 502 as determined by the cross beam 504 is at least as wide as a turbine assembly.

The central hull 502c includes a centralised control and operations module 538 for the entire assembly. This may include any or all of control for: the apparatus for raising the turbines; individual turbines, e.g. to stop generation if a fault is detected; variable buoyancy components; anchoring system adjustments; power output or generation; hydrofoil angle; and safety features.

In some examples, this is not necessary, and control is distributed throughout the hulls. In some cases, there may even be redundancy in the control apparatus as an additional safety feature.

The central hull 502c may include additional buoyancy portions relative to the outer hulls 502a and 502b. In addition, any of the hulls 502 may include variable buoyancy means, such as floodable ballast tanks. This can help the apparatus 500 to adapt to changes in the forces it experiences when the turbines 508 are in a raised configuration as compared to when the turbines 508 are in a deployed configuration.

In particular, a variable buoyancy for the apparatus 500 can be beneficial for towing the apparatus to or from the intended anchoring location. To assist in such towing operations, in addition to allowing the turbines 508 to be raised, one or more of the hulls 502 can be arranged to have a streamlined end. The turret anchoring system 540 provides a convenient attachment point for towing, and consequently the proximal end of the hull(s) 502 should be streamlined.

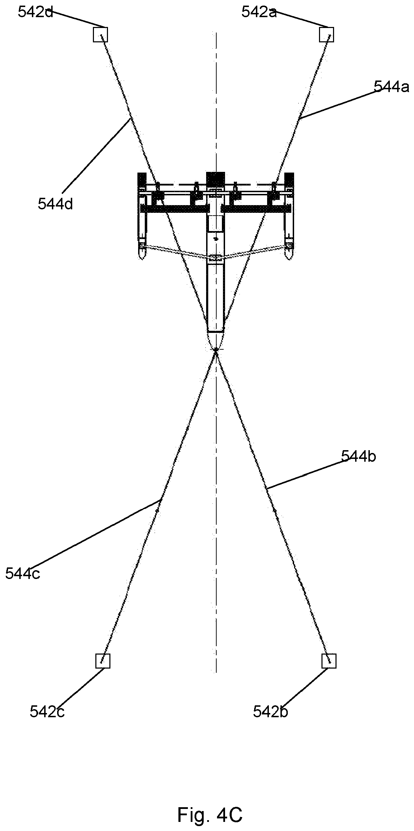

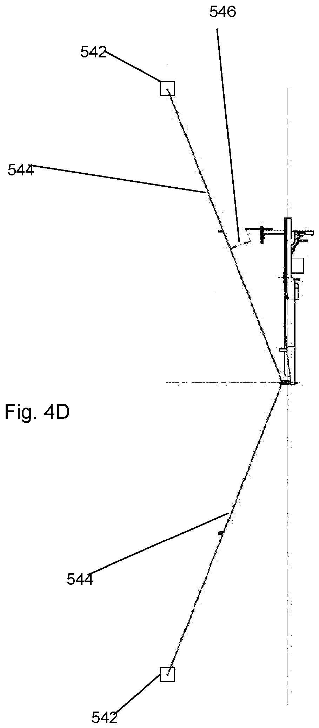

Figures 4C and 4D show respectively a plan view and a side elevation of the apparatus shown in Figures 4A 4B, highlighting the mooring system. Four anchoring cables 544a-d (collectively referred to as 544) spread out in a pyramidal arrangement to four respective anchoring points 542a-d (collectively referred to as 542) on the water bed. The large footprint of this arrangement provides a stable anchoring system while the apparatus is able to rotate around the turret 540. Typically, the anchor lines 544 make an angle of 20° or less with the horizontal where the meet the water bed.

The third central hull 502c is typically at least 1.5 times as long as the expected depth of the lowest part of the turbines 508 below the water level, when the turbines 508 are in the deployed configuration. This directly affects the clearance 546 between the anchor lines and the turbines 508 as the apparatus 500 swings around the turret. Increasing the length of the central hull 502c relative to the expected depth of the lowest part of the turbines 508 allows the anchor lines 544 to make correspondingly smaller angles with the horizontal where they meet the water bed. This in turn leads to a greater spread in the mooring system, making for a more stable arrangement. This is particularly beneficial in shallow water areas, where there may not be sufficient depth to allow the anchor lines 544 to spread out far enough to achieve the desired stability.

In some examples, the central hull 502c has additional buoyancy concentrated at the proximal end (close to the turret anchoring system 540) which can help to provide resistance to pitching moments. In other examples, the central hull 502c may be wider at the proximal end (the end where the turret anchor 540 is located, i.e. upstream), for example by tapering to a widest point at the proximal end. In addition to providing increased buoyancy, such a design may also increase drag forces at the front (distal) end of the apparatus, which further helps to provide stability against pitching moments. The combination of increased buoyancy and an elongated central hull allows resistance to pitching moments by increasing the lever arm of the third hull. In some examples, the above features in which the central hull is elongated hull, wider at the front (proximal) end, or more buoyant at the proximal end may be combined together. In cases where there is an even number of hulls (e.g. 2), such that there is no central hull, one or more pairs of symmetrically arranged hulls may be provided with either increased buoyancy at its upstream end, or (in cases where the "upstream end" changes due to e.g. tidal effects) with variable buoyancy means at each end, as described previously.

While these considerations are raised in relation to the embodiment shown in Figures 4A-D, the general principles of including additional buoyancy at the upstream end of a turbine assembly to resist pitching moments due to turbine thrust can be applied to all embodiments discussed herein. In the cases where the device does not yaw in response to local currents, but remains fixed, the upstream end can be made more buoyant by making use of variable buoyancy elements at either end (upstream/downstream) of the device to selectively increase the buoyancy at the upstream end, which may change with time, in response to tides, for example.

Similarly, designs in which the central hull 502c is wider at the proximal (upstream) end may be applied to all designs disclosed herein. Where the apparatus comprises number of hulls other than three, one or more of the hulls may have a wider upstream end, to increase drag, and resist pitching moments. Where there are more an even number of hulls, one or more pairs of symmetrically arranged hulls may have an upstream end which includes the widest point of the hull. In cases where the upstream end changes (e.g. due to tidal effects), a symmetrical arrangement of hulls may be provided which have an hourglass shape which tapers from a thinnest middle region to a pair of widest points at both the distal and proximal ends. In order to not negate the effect of the widest portions, the hull may form the shape of a pair of isosceles triangles with an acute apex angle (when viewed from above), so that the downstream portion of the hourglass hull is more streamlined in the direction of fluid flow than the upstream end of the hull.

Lastly, the central hull (or hulls, where there are more than three hulls) may be elongated such that the central hull extends beyond both the proximal and distal ends of the other hulls. This allows for a longer lever arm in both flow directions when the local flow direction changes, e.g. due to tides.

In the above discussion, symmetrical arrangements of hulls are those that are symmetric about a line of symmetry extending from a proximal end of the apparatus to a distal end of the apparatus. This helps to ensure that the apparatus does not generate any yaw or roll motions due to asymmetries in drag or buoyancy.

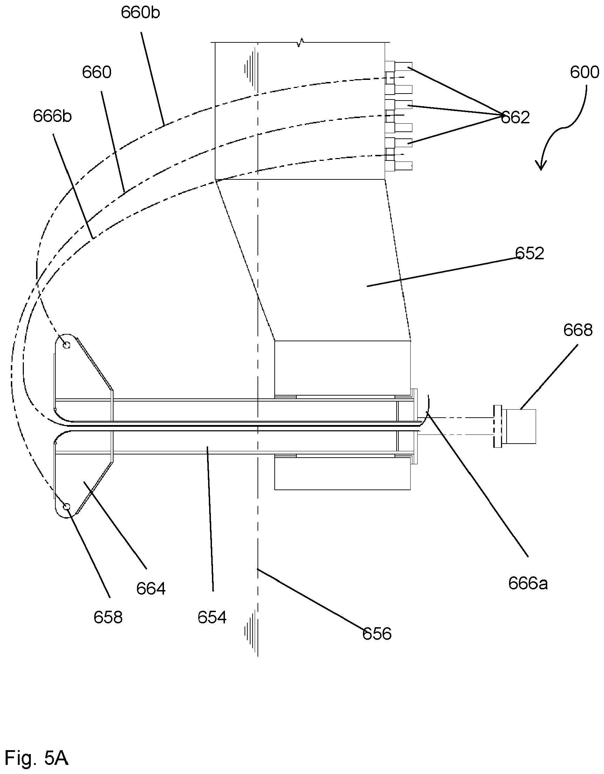

Turning now to Figure 5A, a turret mooring system 600 is shown in detail. This may be, for example, the turret mooring system shown above in Figures 4A to 4D. A turret 654 is mounted at an end of a buoyant assembly 652. The turret forms an integral part of the assembly, in the sense that the assembly 652 is assembled and provided with the turret 654 already mounted in it. For example, the turret 654 may be permanently attached to the assembly 652 in the sense that the turret is not intended to be removed from the assembly 652, except in unusual cases of repair, replacement, maintenance, etc. for which it is envisaged that the whole assembly 652 (including the turret 654) is returned to calm waters or even dry land to provide easier access to the turret 654.

The assembly 652 may be an assembly such as described above, or it may be FPSO, ship, floating wind power platform, etc. Indeed, in some applications, the turret 654 need not be mounted at an end of the assembly 652, but can be mounted centrally, at a side, etc. depending on the desired application. The turret 654 extends through an opening in the upper surface of the assembly 652, through the assembly, and out of a lower surface, protruding downwards from the assembly by a distance. In some examples, there may be no opening in the upper surface, and the upper portion of the turret 654 is located entirely within the body of the assembly 652, protruding only at the lower surface. The turret 654 is mounted rotatably in the buoyant assembly 652. This means that when external forces act on the assembly, e.g. a change in local current direction, the assembly can swing around while the turret remains in the same orientation relative to e.g. the water bed.

As shown in the Figure, there is an expected water level 656, derived based on the buoyancy of the assembly, and the conditions in which it is expected to operate (e.g. the same device will float higher in salt water than in fresh water). The lower end of the turret 654 extends below the expected water level 656 in each case. In some cases, the turret 654 may be slidably mounted (in addition to being rotatably mounted) in the buoyant assembly 652, to allow it to move in a vertical direction (that is, further into or out of the water). This can assist in reducing drag on the assembly 652 when it is being towed to an installation site. In addition, although not necessary in every embodiment, the assembly shown in Figures 5A to 5D includes a recess in the lower surface of the assembly 652 in which the opening is located. This means that the turret 654 can be raised above the lowest parts of the assembly 652. In particular, the base of the assembly 652 may be flat or otherwise able to be laid stably on a flat surface. In this case, the turret 654 may be slidable such that the lowest portions of the turret 654 are above the points of support for the assembly 652 when laid on a flat surface. In other words, the turret 654 can be raised sufficiently far that it does not interfere with the ability of the assembly 652 to be rested stably on a flat surface. In some cases, the turret 654 may be slidable sufficiently far that its lowest parts are above the expected water line of the assembly 656. Indeed, by virtue of the recess, the turret 654 need not even be slidable for the above arrangements to be true. Although the recess is shown as a single raised portion at one end of the assembly 652, in some cases the recess may be formed as a cylindrical or conical indentation in the lower surface of the assembly 652.

At the lower end of the turret 654, are attachment points 658 for first and second primary lines 660a, 660b. The primary lines 660 are secured on the upper surface of the buoyant assembly 652 but suitable attachment means 662, for example, clips, clamps, panama leads etc. This ensures that the leads are accessible when required, to assist in connecting the assembly 652 to the anchoring lines. The use of primary lines in this way allows the anchoring lines to be conveniently connected to the assembly 652, without the need to access the base of the turret 654, which may be, for example underwater. While two primary lines are shown, there may be more or less than this, in some examples. For example, it is not necessary to have any primary lines, but instead, the anchor lines could be attached directly to the turret. Alternatively, some embodiments may have three, four, or more primary lines arranged around the turret 654.

The primary lines 660 are insufficiently long to anchor the assembly 652 to the water bed. They may be, for example, between 5 and 15 metres long, for example about 8 metres long. As will be seen below, they must still be strong enough to anchor the assembly 652. For example they may be 38mm diameter steel cables for a relatively small assembly 652.

The primary lines 660 are attached to flanges 664 at the base of the turret 654. While not strictly necessary, the flanges provide a greater degree of resistance to the turret twisting relative to the water bed than would be provided by directly attaching the primary lines 660 or anchoring system directly to the turret 654.

Also provided is a power cable pull-in line 666 extending through a hollow core of the turret 654, having a first end 666a at the top of the turret 654, and a second end 666b which extends from the bottom of the turret 654 and is clipped to the upper surface of the assembly 652 using similar means for temporary attachment 662 as are used for the primary lines.

Lastly, an electrical interface 668 is provided at the top of the turret. This may be removable or at least slidably attached to allow the interface to be held out of the way while a power cable is put into position.

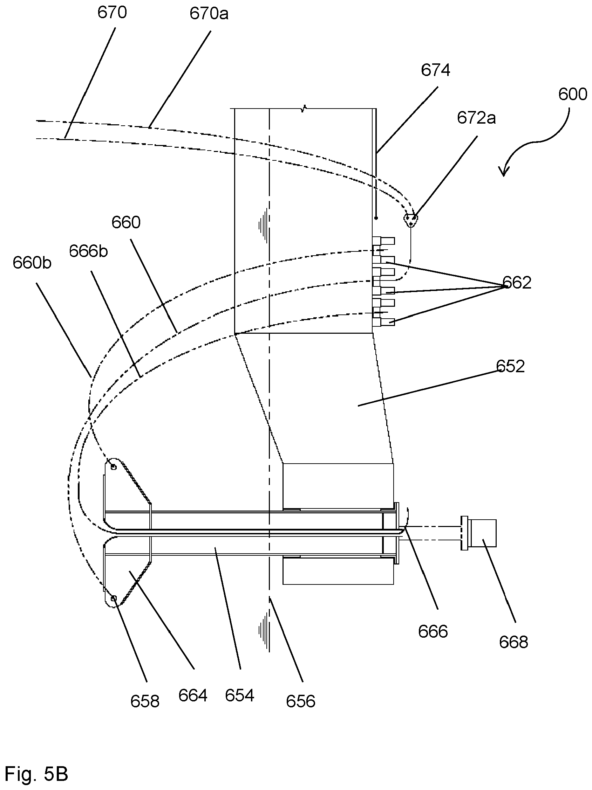

Turning now to Figure 5B, wherein the same reference numerals refer to the same parts, a first stage in the installation process of the assembly 652 at an installation site is shown. In some embodiments, this stage is performed at slack high tide. Performing the step at slack water period prevents unwanted current flows from interfering with the process of connecting anchoring lines to the assembly. Performing the step specifically at slack high tide ensures that the anchoring lines, when correctly tensioned, are sufficiently long to handle the maximum swell that the system is expected to experience.

The situation illustrated in Figure 5B includes attaching first and second anchoring lines 670a, 670b to the first primary line 660a. In the example shown, the primary line 660a has a triangular connector at its end. The triangular connector has two attachment points for the anchoring lines 670 to be joined to it. The attachment of the anchoring lines 670 to the assembly 652 is the top priority in the installation, as slack high tide lasts only for a limited duration, before local currents pick up and complicate the installation process.

Prior to arrival of the assembly 652 at the installation site, the anchoring lines 670 have already been anchored to the water bed. A simply buoy can be left in the sea with the lines coupled to it, to allow easy retrieval of the anchoring lines 670. In addition, any other infrastructure can be attached to the buoy, e.g. power cables 674 for providing power to the assembly 652, or delivering power generated by the assembly 652 to shore, or risers to carry oil and gas from the water bed to the surface.

Once the assembly 652 arrives at the installation site, the anchor lines 670 are decoupled from the buoy and brought onto the upper surface of the assembly 652, near to the attachment means 662 for the primary lines 660. In addition, in the case where power cables 674 are also coupled to the buoy, these are laid along the upper surface of the assembly at the same time. Once these parts are in position, the anchoring lines 670 are connected to the primary lines 660, and returned to the water. This results in a quick and simple attachment of anchoring lines 670 to the assembly 652. In general, it is preferable that the anchoring lines 670 which are connected first are ones which will become upstream lines when slack high tide ends and currents start to flow, as this results in a stable arrangement under those conditions.

Each anchoring line 670 is long enough to reach the water bed. In addition, sufficient strength is required to ensure that the assembly remains stably anchored in place. For example, a relatively small assembly 652 having four anchoring lines 670 in total, may have each line be 32mm diameter steel cable. Since the tide will change the direction of the main force on the assembly 652, it is often the case that whichever lines are upstream lines provide the entire support for the assembly, wherein the lines which are upstream at any given time changes with the tide direction. In this case, approximately half the anchoring lines 670 must be strong enough to stably anchor the assembly 652 against such tidal forces, since only the upstream half are actually under tension, while the downstream lines may be slack.

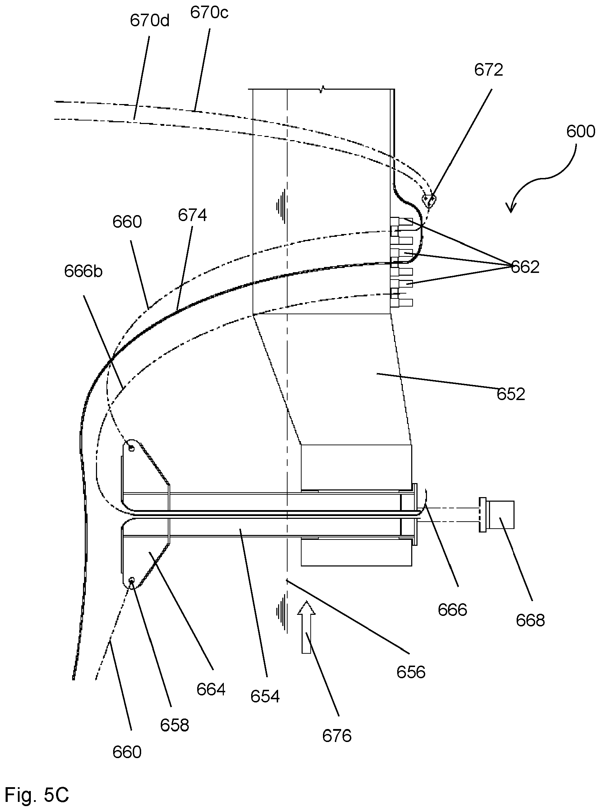

Turning now to Figure 5C, in which a later stage of the installation process is shown. Here, the tide has started to go out, and there is a net current in a direction shown by arrow 676. As can be seen, the anchoring lines 670a, 670b coupled to the first primary line 660a are upstream relative to this flow 676, and the assembly is stably moored until the direction of the tide changes again. This gives a period of several hours in which the remaining steps can be completed.

The next stage is to retrieve two further anchoring lines 670c, 670d from the buoy and connect them to the connector 672b on the end of the second primary line 660b. Once more, when the anchoring lines 670 have been connected in this way, the lines 660, 670 and connector 672 can be pushed overboard to complete the mooring process. A final optional step is to perform any further tensioning of the mooring system, if required.

It should be noted, of course, that in the event that there are different numbers of primary lines 660 and/or anchoring lines 670, the same general process can be followed to anchor the assembly 652 in position. This process can be summarised as:
1. Assemble assembly 652 with integrated turret 654, and anchor anchoring lines 670 to water bed, with upper ends retained on a buoy;
2. Bring assembly 652 to installation site;
3. Couple upstream anchoring lines 670 to assembly 652 (via primary lines 660, if present);
4. Couple remaining anchoring lines 670 to assembly 652 (via primary lines 660, if present).

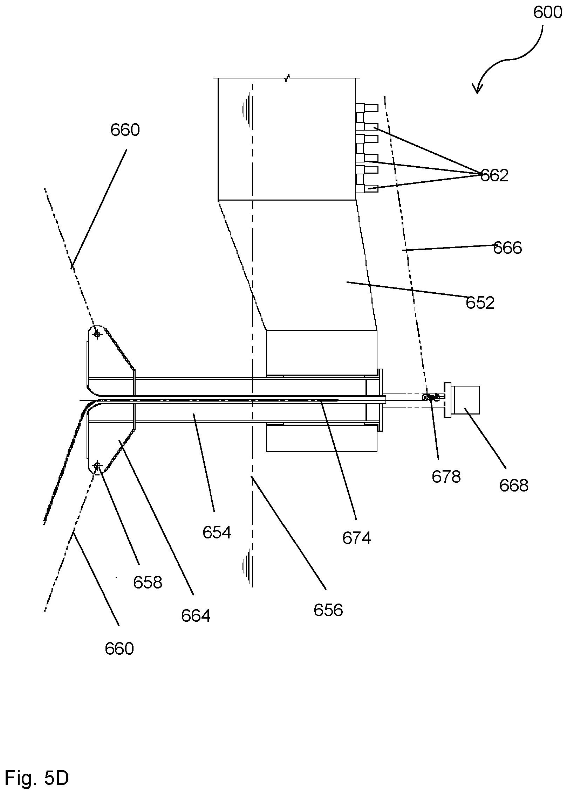

Finally, now that the assembly 652 is stably anchored in position, the steps shown in Figure 5D can be performed. The power cable 674 is connected to the cable pull-in line 666 and the first end of the pull-in line 666a is pulled to drag the power cable 674 through the hollow core of the turret 654. A snatch block 678 may be used to assist in this process. Once this is complete, the power cable 674 can be connected to the electrical interface 668 (e.g. an electrical slip ring), and the electrical interface can be lowered into position, sealed against water damage or other environmental effects, and the apparatus is ready to be used.

The present system has the benefit that the installation procedure is greatly simplified, since the turret can be fitted in calm waters or on land. In addition, there is no need to have electrical connections/interfaces left in the water for long periods, since the interface forms part of the integrated turret, which remains on the assembly (and thus potentially on land) until the assembly is ready to be installed. Finally, the electrical interface and load bearing parts of the connection are kept separate.

The present system is particularly advantageous when used with turbine assemblies, for example tidal turbine devices. When tidal turbine devices are operating (i.e. generating power), the upstream lines take the load, while the downstream lines may be slack. Since the direction of the tide reverses periodically, this means that each line will be slack at some point during the tidal cycle. Adjustments to the tensioning of the lines can be made while they are slack, so it is less critical to ensure that the lines are correctly tensioned prior to coupling them to the buoyant assembly.

Contrast this situation with an FPSO having a riser, for example. The riser is by far the most fragile element of such a system, and must be held in a substantially fixed location at all times. Therefore, correct tensioning of the anchoring lines prior to installation is important. In such cases, each line may require around 20t or 30t of tension, while operational loads may be ten times as large as this. For this reason, it is often considered to be best to use a traditional turret system in these cases, in which the turret is tensioned at sea, independently of the FPSO, and is then mounted to the assembly at sea, once the lines are correctly tensioned.

Lastly, the turret of the present system is particularly suited to turbine systems, due to its protrusion below the bulk of the buoyant assembly. Turbines are mounted at a depth such that in operation the top of the rotor does not break the water surface during a full revolution. In fact, it is recommended that the tip of the blade remains submerged a minimum distance below the water surface during a full revolution, known as the immersion depth. This may be provided as a function of the rotor diameter, e.g. 0.5 times the diameter. Alternatively, the particular depth may be specified for a given rotor size and the intended application, for example 6.3m diameter rotors may be specified as requiring a 1.5m tip immersion. This affects the angle which the anchoring lines can make relative to the water surface.

It is generally preferable for such an angle to be relatively small, for example 20°. When the lowest extent of the turbine blades during a full revolution is many metres below the water surface, there is a risk of the blades hitting the anchoring lines unless this angle is increased. By providing a longer turret (i.e. one which also extends below the assembly), this effect can be counteracted, and small anchoring line angles are once again possible. This applies even more so when the turret is slidable.

An alternative would be to space the turret anchoring point further away (horizontally) from the turbines, which would require a complete redesign of the buoyant assembly, and is in any case significantly more expensive than providing a longer turret. In some cases, there may be a limit to how far the turret can be advantageously extended in this way. Since the turret is the sole point of contact between the anchoring system and the buoyant assembly, it is highly load bearing. A longer turret results in larger moments acting on the assembly via the turret. This in turn requires that the bearings for the turret be hardier, which in turn increases costs.

Turning now to Figure 4, there is shown a mooring system 400 configured specifically for use with turbine assemblies. In particular, the turbine assemblies shown in Figures 1A to 3C can be securely anchored using such a system.

The mooring system comprises an upstream anchoring point on the water bed (not shown) joined by an anchoring line 432a to an upstream buoy 434a. The upstream buoy 434a is further provided with three tethers 436a, which each couple to a different hull of the turbine assembly. There are three tethers 436a in this case because the turbine assembly has three hulls.

Similarly, the mooring system comprises a downstream anchoring point on the water bed (not shown) joined by an anchoring line 432b to a downstream buoy 434b. The downstream buoy 434b is further provided with three tethers 436b, which each couple to a different hull of the turbine assembly. There are three tethers 436b in this case because the turbine assembly has three hulls.

In some embodiments, there may be multiple tethers coupled to one or more of the hulls. In addition, there may be any number of hulls on the turbine assembly, meaning that the number of tethers may also change to accommodate this.

The turbines 408 shown in this figure extend down into the water beneath the main body of the assembly. This offset combined with the large thrust causes significant pitching motions of the assembly, since the large thrust force generates a large moment due to the offset of the turbine 408. The use of buoys 434 as an intermediate point of the mooring system between the water bed and the assembly removes most or all of the vertical component of the mooring system. In this arrangement, the tethers couple to the turbine assembly making a very small (or no) angle with horizontal. This can help provide a mooring system which is adapted to resist the large pitching forces generated by turbine assemblies.

In order to achieve this, the buoys 434 must have a large positive buoyancy in water, in order that the introduce a large amount of tension into the tethers and the anchor lines, which helps to hold the tethers horizontally. For example, for a four turbine system, a buoyancy of at least 10 tons per buoy helps to achieve this. Larger assemblies require larger buoyancies of the buoys. Likewise, for smaller turbine assemblies, e.g. having only two turbines, the buoyancy of the buoys 434 need not be so large.

The buoys 434 may be made from hollow containers, e.g. hollow steel cylinders, or they may be filled with buoyant foams, etc. Typically, to achieve the buoyancy required, the buoys are around 5m long and 1m diameter cylinders. In some cases, the buoys may have a variable buoyancy, for example to allow the mooring system to adapt to changing water conditions or to changes in the turbine assembly, such as raising some or all of the turbines.

## Claims

1. An apparatus (200) for raising a flowing water driven turbine relative to a turbine support (202a, 202b), the apparatus (200) comprising:
a turbine mount (210);
a turbine (208) mounted on the turbine mount (210);
means for providing an upward force to raise the turbine (208) above the expected waterline of the turbine support from a position below the expected position of the waterline; and
a guidance means (224a); wherein
the guidance means (224a) is engaged with the turbine mount (210), and the turbine (208) is moveable in a path defining an arc about a pitch or roll axis in response to the upward force by virtue of the engagement between the guidance means and the support (202a, 202b); the apparatus (200) being **characterised by**
means which cause a rotation of the turbine (208) about a yaw axis for a portion of the upward movement of the turbine (208) when the upward force is applied.

2. The apparatus (200) of claim 1, wherein the guidance means is a pivot, and the turbine (208) is moveable in an arc by virtue of the turbine mount (210) being pivotable relative to the turbine support (202a, 202b).

3. An apparatus (200) according to claim 1, wherein the guidance means comprises a curved rail or slot (224a); optionally wherein the upward force causes the turbine mount (210) to slide along the guidance means (224a).

4. The apparatus (200) of any preceding claim, wherein the turbine mount (210) is an elongate beam.

5. The apparatus (200) of claim 4, wherein the elongate beam is a telescoping beam comprising an inner beam (116a) and an outer beam (116b) arranged to slide relative to one another; wherein
the telescoping beam is retractable by the inner beam (116a) sliding inside the outer beam (116b) in response to the upward force.

6. The apparatus (200) of claim 5, wherein the means for providing an upward force comprises means for retracting the inner beam (116a) within the outer beam (116b);
optionally wherein the means for providing an upward force causes the sliding and the arced path motions to occur sequentially or simultaneously;
optionally wherein the inner beam (116a) comprises at least one stop for engaging with the outer beam (116b) to inhibit the inner beam (116a) sliding inside the outer beam (116b) beyond a predetermined point;
optionally wherein the upward force causes a sliding action until the at least one stop engages with the outer beam (116b) and causes the turbine (208) to move in a path defining an arc as the telescoping beam interacts with the guidance means once the at least one stops have made contact with the outer beam (116b);
optionally wherein the interaction between the telescoping beam and the guidance means is a pivoting interaction;
optionally wherein the upper end of the telescoping beam is counterweighted to at least partially balance the weight of the turbine (208).

7. An apparatus (200) according to claim 5 or claim 6 wherein the yaw axis rotation is caused by an interaction between the inner beam (116a) and the outer beam (116b) as the inner beam (116a) slides inside the outer beam(116b);
optionally wherein the inner beam (116a) has protrusions on its outer surface which engage with corresponding indentations on the inner surface of the outer beam (116b) to cause the yaw axis rotation;
optionally wherein the protrusions and indentations comprise threaded portions.

8. An apparatus (200) according to any preceding claim, wherein the means for providing the upward force comprises a single mechanism.

9. An apparatus (200) according to any preceding claim, wherein the upward force is provided by a winch (122) and cable (120).

10. An apparatus (200) according to claim 9 as dependent on any of claims 5 to 7, wherein the cable (120) is attached to the inner beam (116a), and runs over a pulley (118) to the winch (122), preferably wherein the pulley (118) is fixed relative to the outer beam (116b).

11. An apparatus (200) according to claim 1, wherein:
the turbine mount is a frame (326) slidably mounted on the turbine support (202a, 202b); and
the turbine (208) is mounted on the frame; and wherein the slidable mounting comprises a projection arranged to run in a groove (328) in the body of the turbine support (202a, 202b) and the groove (328) is configured to cause the turbine and frame (326) to follow an arced path as the projection runs along the groove (328).

12. An apparatus (200) according to claim 11, wherein the groove (328) comprises a first portion causing lifting of the frame and a second portion causing rotation of the frame to raise the turbine;
optionally wherein the upward force is provided by a winch (122) and cable (120).

13. The apparatus (200) of any preceding claim, wherein the turbine (208) moving in a path defining an arc is a swinging motion.

14. A method of raising a flowing water driven turbine (208) relative to a turbine support (202a, 202b), comprising the steps of:
applying an upward force to the turbine (208); and
swinging the turbine (208) about a pitch or roll axis for a portion of the upward movement of the turbine (208) when the upward force is applied to the turbine (208) to raise the turbine (208) above the expected waterline of the turbine support (202a, 202b) from a position below the expected position of the waterline, **characterised in that**
the upward force causes the turbine (208) to rotate about a yaw axis for a portion of the upward movement of the turbine (208) when the upward force is applied to the turbine (208).

15. The method of claim 14, wherein the application of an upward force is the arced path movement provided by an apparatus (200) according to any one of claims 1 to 13.

## Patentansprüche

1. Vorrichtung (200) zum Anheben einer von strömendem Wasser angetriebenen Turbine relativ zu einem Turbinenträger (202a, 202b), wobei die Vorrichtung (200) Folgendes umfasst:
eine Turbinenhalterung (210);
eine an der Turbinenhalterung (210) montierte Turbine (208);
Mittel zum Erzeugen einer Aufwärtskraft zum Anheben der Turbine (208) über die erwartete Wasserlinie des Turbinenträgers von einer Position unterhalb der erwarteten Position der Wasserlinie; und
ein Führungsmittel (224a); wobei
das Führungsmittel (224a) mit der Turbinenhalterung (210) in Eingriff steht und die Turbine (208) aufgrund des Eingriffs zwischen dem Führungsmittel und dem Träger (202a, 202b) als Reaktion auf die Aufwärtskraft auf einer einen Bogen um eine Nick- oder Rollachse definierenden Bahn bewegbar ist; wobei die Vorrichtung (200) **gekennzeichnet ist durch** Mittel, die eine Drehung der Turbine (208) um eine Gierachse für einen Teil der Aufwärtsbewegung der Turbine (208) bewirken, wenn die Aufwärtskraft ausgeübt wird.

2. Vorrichtung (200) nach Anspruch 1, wobei das Führungsmittel ein Drehpunkt ist und die Turbine (208) aufgrund der Tatsache, dass die Turbinenhalterung (210) relativ zum Turbinenträger (202a, 202b) drehbar ist, in einem Bogen beweglich ist.

3. Vorrichtung (200) nach Anspruch 1, wobei das Führungsmittel eine(n) gekrümmte(n) Schiene oder Schlitz (224a) aufweist; wobei die Aufwärtskraft optional bewirkt, dass die Turbinenhalterung (210) entlang des Führungsmittels (224a) gleitet.

4. Vorrichtung (200) nach einem vorherigen Anspruch, wobei die Turbinenhalterung (210) ein länglicher Balken ist.

5. Vorrichtung (200) nach Anspruch 4, wobei der längliche Balken ein teleskopartiger Balken ist, der einen inneren Balken (116a) und einen äußeren Balken (116b) umfasst, die zum Gleiten relativ zueinander ausgelegt sind; wobei
der teleskopartige Balken dadurch einziehbar ist, dass der innere Balken (116a) als Reaktion auf die Aufwärtskraft innerhalb des äußeren Balkens (116b) gleitet.

6. Vorrichtung (200) nach Anspruch 5, wobei das Mittel zum Erzeugen einer Aufwärtskraft Mittel zum Einziehen des inneren Balkens (116a) in den äußeren Balken (116b) umfasst;
wobei optional das Mittel zum Erzeugen einer Aufwärtskraft bewirkt, dass die Gleit- und bogenförmigen Bahnbewegungen nacheinander oder gleichzeitig auftreten;
wobei optional der innere Balken (116a) mindestens einen Anschlag für den Eingriff mit dem äußeren Balken (116b) umfasst, um zu verhindern, dass der innere Balken (116a) innerhalb des äußeren Balkens (116b) über einen vorbestimmten Punkt hinaus gleitet;
wobei optional die Aufwärtskraft eine Gleitbewegung bewirkt, bis der mindestens eine Anschlag mit dem äußeren Balken (116b) in Eingriff kommt und bewirkt, dass sich die Turbine (208) auf einer einen Bogen definierenden Bahn bewegt, während der teleskopartige Balken mit dem Führungsmittel zusammenwirkt, sobald der mindestens eine Anschlag mit dem äußeren Balken (116b) in Kontakt gekommen ist;
wobei optional die Wechselwirkung zwischen dem teleskopartigen Balken und dem Führungsmittel eine schwenkende Wechselwirkung ist;
wobei optional das obere Ende des teleskopartigen Balkens mit einem Gegengewicht versehen ist, um das Gewicht der Turbine (208) zumindest teilweise auszugleichen.

7. Vorrichtung (200) nach Anspruch 5 oder Anspruch 6, wobei die Gierachsendrehung durch eine Wechselwirkung zwischen dem inneren Balken (116a) und dem äußeren Balken (116b) bewirkt wird, während der innere Balken (116a) innerhalb des äußeren Balkens (116b) gleitet;
wobei optional der innere Balken (116a) an seiner Außenfläche Vorsprünge aufweist, die mit entsprechenden Vertiefungen an der Innenfläche des äußeren Balkens (116b) in Eingriff stehen, um die Drehung der Gierachse zu bewirken;
wobei optional die Vorsprünge und Vertiefungen Gewindeabschnitte aufweisen.

8. Vorrichtung (200) nach einem vorherigen Anspruch, wobei das Mittel zum Erzeugen der Aufwärtskraft einen einzigen Mechanismus umfasst.

9. Vorrichtung (200) nach einem vorherigen Anspruch, wobei die Aufwärtskraft durch eine Winde (122) und ein Seil (120) erzeugt wird.

10. Vorrichtung (200) nach Anspruch 9 in Abhängigkeit von einem der Ansprüche 5 bis 7, wobei das Seil (120) am inneren Balken (116a) befestigt ist und über eine Rolle (118) zur Winde (122) läuft, wobei die Rolle (118) relativ zum äußeren Balken (116b) vorzugsweise fest ist.

11. Vorrichtung (200) nach Anspruch 1, wobei:
die Turbinenhalterung ein Rahmen (326) ist, der verschiebbar auf dem Turbinenträger (202a, 202b) montiert ist; und
die Turbine (208) an dem Rahmen befestigt ist; und wobei
die verschiebbare Halterung einen Vorsprung aufweist, der so ausgelegt ist, dass er in einer Nut (328) im Körper des Turbinenträgers (202a, 202b) läuft, und die Nut (328) so konfiguriert ist, dass sie bewirkt, dass die Turbine und der Rahmen (326) einer gekrümmten Bahn folgen, während der Vorsprung entlang der Nut (328) läuft.

12. Vorrichtung (200) nach Anspruch 11, wobei die Nut (328) einen ersten Abschnitt, der ein Anheben des Rahmens bewirkt, und einen zweiten Abschnitt aufweist, der eine Drehung des Rahmens zum Anheben der Turbine bewirkt;
wobei optional die Aufwärtskraft durch eine Winde (122) und ein Seil (120) erzeugt wird.

13. Vorrichtung (200) nach einem vorherigen Anspruch, wobei die Bewegung der Turbine (208) auf einer einen Bogen definierenden Bahn eine schwingende Bewegung ist.

14. Verfahren zum Anheben einer von strömendem Wasser angetriebenen Turbine (208) relativ zu einem Turbinenträger (202a, 202b), das die folgenden Schritte beinhaltet:
Aufbringen einer Aufwärtskraft auf die Turbine (208); und
Schwingenlassen der Turbine (208) um eine Nick- oder Rollachse für einen Teil der Aufwärtsbewegung der Turbine (208), wenn die Aufwärtskraft auf die Turbine (208) ausgeübt wird, um die Turbine (208) über die erwartete Wasserlinie des Turbinenträgers (202a, 202b) von einer Position unterhalb der erwarteten Position der Wasserlinie anzuheben, **dadurch gekennzeichnet, dass** die Aufwärtskraft bewirkt, dass sich die Turbine (208) für einen Teil der Aufwärtsbewegung der Turbine (208) um eine Gierachse dreht, wenn die Aufwärtskraft auf die Turbine (208) ausgeübt wird.

15. Verfahren nach Anspruch 14, wobei das Aufbringen einer Aufwärtskraft die bogenförmige Bahnbewegung ist, die von einer Vorrichtung (200) nach einem der Ansprüche 1 bis 13 erzeugt wird.

## Revendications

1. Appareil (200) destiné à soulever une turbine entraînée par de l'eau en écoulement par rapport à un support de turbine (202a, 202b), l'appareil (200) comprenant :
un montage de turbine (210) ;
une turbine (208) montée sur le montage de turbine (210) ;
un moyen destiné à fournir une force ascendante pour soulever la turbine (208) au-dessus de la ligne d'eau attendue du support de turbine à partir d'une position au-dessous de la position attendue de la ligne d'eau ; et
un moyen de guidage (224a) ; dans lequel
le moyen de guidage (224a) est entré en prise avec le montage de turbine (210), et la turbine (208) est capable de mouvement sur une trajectoire définissant un arc autour d'un axe de tangage ou de roulis en réponse à la force ascendante grâce à l'entrée en prise entre le moyen de guidage et le support (202a, 202b) ; l'appareil (200) étant **caractérisé par** un moyen qui provoque une rotation de la turbine (208) autour d'un axe de lacet pour une partie du mouvement ascendant de la turbine (208) quand la force ascendante est appliquée.

2. Appareil (200) selon la revendication 1, dans lequel le moyen de guidage est un pivot, et la turbine (208) est capable de mouvement en arc grâce au fait que le montage de turbine (210) est capable de pivotement par rapport au support de turbine (202a, 202b).

3. Appareil (200) selon la revendication 1, dans lequel le moyen de guidage comprend un rail incurvé ou une fente incurvée (224a) ; facultativement dans lequel la force ascendante amène le montage de turbine (210) à coulisser le long du moyen de guidage (224a).

4. Appareil (200) selon l'une quelconque des revendications précédentes, dans lequel le montage de turbine (210) est une poutre allongée.

5. Appareil (200) selon la revendication 4, dans lequel la poutre allongée est une poutre télescopique comprenant une poutre interne (116a) et une poutre externe (116b) agencées pour coulisser l'une par rapport à l'autre ; dans lequel
la poutre télescopique est rétractable par le coulissement de la poutre interne (116a) à l'intérieur de la poutre externe (116b) en réponse à la force ascendante.

6. Appareil (200) selon la revendication 5, dans lequel le moyen destiné à fournir une force ascendante comprend un moyen destiné à rétracter la poutre interne (116a) au sein de la poutre externe (116b) ;
facultativement dans lequel le moyen destiné à fournir une force ascendante permet que le coulissement et les mouvements suivant une trajectoire arquée ont lieu de manière séquentielle ou simultanée ;
facultativement dans lequel la poutre interne (116a) comprend au moins une butée destinée à entrer en prise avec la poutre externe (116b) pour empêcher la poutre interne (116a) de coulisser à l'intérieur de la poutre externe (116b) au-delà d'un point prédéterminé ;
facultativement dans lequel la force ascendante provoque une action de coulissement jusqu'à ce que l'au moins une butée entre en prise avec la poutre externe (116b) et amène la turbine (208) à se déplacer sur une trajectoire définissant un arc alors que la poutre télescopique interagit avec le moyen de guidage une fois que l'au moins une butée est entrée en contact avec la poutre externe (116b) ;
facultativement dans lequel l'interaction entre la poutre télescopique et le moyen de guidage est une interaction de pivotement ;
facultativement dans lequel l'extrémité supérieure de la poutre télescopique est dotée de contrepoids pour équilibrer au moins partiellement le poids de la turbine (208) .

7. Appareil (200) selon la revendication 5 ou la revendication 6 dans lequel la rotation autour d'un axe de lacet est provoquée par une interaction entre la poutre interne (116a) et la poutre externe (116b) alors que la poutre interne (116a) coulisse à l'intérieur de la poutre externe (116b) ;
facultativement dans lequel la poutre interne (116a) a des saillies sur sa surface externe qui entrent en prise avec des entailles correspondantes sur la surface interne de la poutre externe (116b) pour provoquer la rotation de l'axe de lacet ;
facultativement dans lequel les saillies et les entailles comprennent des parties filetées.

8. Appareil (200) selon l'une quelconque des revendications précédentes, dans lequel le moyen destiné à fournir la force ascendante comprend un mécanisme unique.

9. Appareil (200) selon l'une quelconque des revendications précédentes, dans lequel la force ascendante est fournie par un treuil (122) et un câble (120).

10. Appareil (200) selon la revendication 9 telle qu'elle dépend de l'une quelconque des revendications 5 à 7, dans lequel le câble (120) est attaché à la poutre interne (116a), et passe sur une poulie (118) jusqu'au treuil (122), préférablement dans lequel la poulie (118) est fixe par rapport à la poutre externe (116b).

11. Appareil (200) selon la revendication 1, dans lequel :
le montage de turbine est un cadre (326) monté de manière coulissante sur le support de turbine (202a, 202b) ; et
la turbine (208) est montée sur le cadre ; et dans lequel
le montage capable de coulissement comprend une saillie agencée pour se déplacer dans une rainure (328) dans le corps du support de turbine (202a, 202b) et la rainure (328) est configurée pour amener la turbine et le cadre (326) à suivre une trajectoire arquée alors que la saillie passe le long de la rainure (328).

12. Appareil (200) selon la revendication 11, dans lequel la rainure (328) comprend une première partie provoquant la levée du cadre et une deuxième partie provoquant la rotation du cadre pour soulever la turbine ;
facultativement dans lequel la force ascendante est fournie par un treuil (122) et un câble (120).

13. Appareil (200) selon l'une quelconque des revendications précédentes, dans lequel la turbine (208) se déplaçant sur une trajectoire définissant un arc est un mouvement de basculement.

14. Procédé de soulèvement d'une turbine entraînée par de l'eau en écoulement (208) par rapport à un support de turbine (202a, 202b), comprenant les étapes suivantes :
application d'une force ascendante à la turbine (208) ; et
basculement de la turbine (208) autour d'un axe de tangage ou de roulis pour une partie du mouvement ascendant de la turbine (208) quand la force ascendante est appliquée à la turbine (208) pour soulever la turbine (208) au-dessus de la ligne d'eau attendue du support de turbine (202a, 202b) à partir d'une position au-dessous de la position attendue de la ligne d'eau, **caractérisé en ce que** la force ascendante amène la turbine (208) à tourner autour d'un axe de lacet pour une partie du mouvement ascendant de la turbine (208) quand la force ascendante est appliquée à la turbine (208).

15. Procédé selon la revendication 14, dans lequel l'application d'une force ascendante est le mouvement suivant une trajectoire arquée fourni par un appareil (200) selon l'une quelconque des revendications 1 à 13.
